# EUROPEAN PATENT APPLICATION

(11) **EP 1 762 964 A1**
(43) Date of publication of application: **14.03.2007**
(21) Application number: 04807578.2
(22) Date of filing: 22.12.2004
(51) Int. Cl.: G06Q 10/00

(54) **CERTIFICATE ISSUANCE SERVER AND CERTIFICATION SYSTEM FOR CERTIFYING OPERATING ENVIRONMENT**

(30) Priority: 04.06.2004 JP 2004166706
(71) Applicant: MITSUBISHI DENKI KABUSHIKI KAISHA, Chiyoda-ku Tokyo 100-8310 (JP)
(72) Inventor: TOGASHI, Masataka, c/o Mitsubishi Denki KK, Tokyo 1008310 (JP); ONO, Tsugihiko, c/o Mitsubishi Denki KK, Tokyo 1008310 (JP); NAKAJIMA, Tsutoku, c/o Mitsubishi Denki KK, Tokyo 1008310 (JP)
(74) Representative: Bohnenberger, Johannes
(86) International application number: PCT/JP2004/019221
(87) International publication number: WO 2005/119539

(57) **Abstract**

It is an object to provide a certification system designed for security patrol, for example, that certifies a patrolled time and a patrolled site in security patrol rounds. It is another object to certify the time when an image was taken and the site where the image was taken, for example, by attaching information about certified time and certified site to the image. The certification system includes a GPS satellite 10 that supplies location information on the earth, a weather satellite 20 that supplies weather information on the earth, information processing equipment 30 that is carried in security patrol rounds, a certificate issuing server 40 that certifies time information and location information, an information storage server 50 that stores certified time information and certified location information as well as an image with the certified time information and certified location information attached thereto, a verification unit 60 that verifies the time when the image was taken and the site where the image was taken, and a network 70 that interconnects the information processing equipment 30, the certificate issuing server 40, the information storage server 50, and the verification unit 60.

## Description

### Technical Field

The present invention relates to information processing equipment, a certificate issuing server, an information storage server, a verification unit, and a certification system, which are used to certify a patrolled time and a patrolled site by a security guard on security patrol duty, or to certify the time when an image was taken and the site where the image was taken in security patrol rounds, for example.

### Background Art

It is a general view, in terms of conventional security on premises and the like, that security guards from security companies make the rounds on the premises at a predetermined site and at a predetermined time to check for unusual situations. Security clients in this case need to confirm whether or not the security guards duly performed patrol duly at a set site and at a set time. Also, the security companies need to certify that a patrol duty has been duly performed.

Among means of implementing such confirmation and certification is a method of recording a visit to a specific site at a specific time. This method can be implemented as follows. Prior to security patrol rounds, lock boxes are placed at predetermined sites along the patrol route. Then, while on duty, a security guard manipulates the locks of the boxes (locking or unlocking) using keys the person carries with him or her.

However, this method cannot cope with ease with the situation where the patrol route has been altered or a new route has been added thereto. This situation should involve relocation or addition of boxes. If a patrol duty arises along the route where no such boxes have been arranged, no records should be available of the patrol duty as duly performed. Hence, it is not possible to certify at a later time that security patrol rounds have been duly made.

Another thing is that the security guards have to carry such keys with them through the patrol duty. It can be a great burden for them to manipulate such locks on patrol duty, which is a duty different from the security duty. Another issue is that their concentration on such lock manipulation may result in less attention to security.

Here is another method to certify and then confirm a patrol duty as duly performed with the patrolled time. This method can be implemented as follows. Transmitters, instead of lock boxes, are arranged at predetermined sites along a patrol route. Then, transmitters transmit the ID information (location information) of the transmitters together with time information to a receiver that a security guard on patrol duty carries with him or her. This method is generally called Time-stamping (See Patent Document 1).

With Time-stamping, however, the operation of recording the location information and the time information is in the hands of security guards, in which a problem is posed. Time-stamped transmitter ID information (location information) and time-stamped time information can be counterfeited or tampered with.

As a solution to this problem, there is a method in which security guards do not operate Time-stamping (See Patent Document 2).
According to this method, a receiver carried by a security guard sends transmitter ID information (location information) and time information received from a transmitter to a server that is managed by a third party without delay. Then, the server executes and stores proper Time-stamping.

With those methods using Time-stamping, however, the aforementioned problem of being unable to cope promptly with the addition or alteration of the patrol route still remains. Transmitters have to be placed at predetermined sites along the patrol route. Also, with the latter method using Time-stamping, there is a possibility of Time-stamping being counterfeited or tampered with by a third party that manages the server.

Usually, patrol records are left after security patrol rounds. It is often the case, however, that such records are made in black and white into a report based on the memories of and notes by security guards about what drew their attention or about unusual states they encountered. As a result, what has been left on record is only what security guards noted.
In other words, no records are available on what they did not take note of. Therefore, it is sometimes difficult to obtain information required at a later date. Furthermore, photos or images may be taken, if necessary. However, the photos and video images are not legitimate tools to specify and certify time and site. They are no use as evidence in a lawsuit or the like.
Patent Document 1: Unexamined Patent Publication No. Sho 61-82288
Patent Document 2: Unexamined Patent Publication No. 2004-46305
Patent Document 3: Unexamined Patent Publication No. 2001-297062

### Disclosure of the Invention

### Problems to be Solved by the Invention

It is an object of the present invention to provide a certification system designed for security patrol for certifying a patrolled time and a patrolled site of security patrol rounds. The certification system does not require devices to be placed in advance to certify a patrolled time and a patrolled site, for example. In addition, the certification system does not limit the sites of security patrol rounds that can be certified to predetermined sites. It is another object of the present invention to protect certified time information and certified location information from counterfeiting or tampering not only by the party concerned but also by a third party, for example. It is still another object of the present invention to certify the time when a video image was taken and the site where the video image was taken by attaching the certified time information and the certified location information to the video image.

### Means to Solve the Problems

A certification system according to this invention may include information processing equipment that may process information; a certificate issuing server that may issue an electronic certificate to certify an operating environment of the information processing equipment; and an information storage server that may store information in a storage memory section. Then, the information processing equipment may transmit a certification request of the operating environment of the information processing equipment to the certificate issuing server. Then, the certificate issuing server may issue the electronic certificate to certify the operating environment of the information processing equipment based on the certification request of the operating environment transmitted from the information processing equipment. Then, the information processing equipment may receive the electronic certificate issued by the certificate issuing server, generate certified information based on the electronic certificate and processed information and identification information to identify the certified information, and transmit the certified information and the identification information to the information storage server. Then, the information storage server may receive the certified information and the identification information from the information processing equipment and store the certified information and the identification information in the storage memory section; and may also receive the identification information, retrieve the certified information stored in the storage memory section, and output the certified information retrieved.

The certificate issuing server may certify time when the information processing equipment operates as the operating environment.

The certificate issuing server may certify location where the information processing equipment operates as the operating environment.

The certificate issuing server may attach unique information available at no other time than a current time to time information based on the certification request of the operating environment transmitted from the information processing equipment, and thereby issue the electronic certificate to certify the current time.

The information processing equipment may acquire time information indicating a current time, and transmit the time information acquired to the certificate issuing server. Then, the certificate issuing server may receive the time information from the information processing equipment, attach unique data available at no other time than a specific time indicated by the time information to the time information, and thereby issue the electronic certificate to certify the specific time.

The information processing equipment may acquire location information indicating a location of the information processing equipment, and transmit the location information acquired to the certificate issuing server. Then, the certificate issuing server may receive the location information from the information processing equipment, attach unique data available at no other location than a specific location indicated by the location information to the location information, and thereby issue the electronic certificate to certify the specific location.

The certificate issuing server may attach compensation information to compensate the specific location indicated by the location information to the location information, and thereby issue the electronic certificate.

The information processing equipment may generate composite information that is made up of the electronic certificate and the processed information, and transmit the composite information to the information storage server as the certified information. Then, the information storage server may receive the composite information and the identification information from the information processing equipment, and store the composite information and the identification information in the storage memory section. The information storage server may also receive a query including the identification information, retrieve the composite information stored in the storage memory section, and output the composite information retrieved.

The information processing equipment may generate composite information that is made up of the electronic certificate and the processed information, calculate a hash value of the composite information, and transmit the hash value to the information storage server as the certified information. Then, the information storage server may receive the hash value and the identification information from the information processing equipment, and store the hash value and the identification information in the storage memory section. The information storage server may also receive the composite information, compares the composite information using the hash value, and store in the storage memory section the composite information compared. The information storage server may also receive a query including the identification information, retrieve the composite information stored in the storage memory section, and output the composite information retrieved.

The certificate issuing server and the information storage server may be one unit.

The information processing equipment may transmit to the information storage server authentication information to access the information storage server together with the certified information and the identification information. Then, the information storage server may receive the certified information, the identification information, and the authentication information from the information processing equipment, and store the certified information and the identification information received in the storage memory section if the authentication information is valid.

The certification system may further include a verification unit that may verify the operating environment of the information processing equipment. Then, the information storage server may transmit part of the certified information and part of the identification information stored in the storage memory section to the verification unit. Then, the verification unit may receive the certified information and the identification information transmitted by the information processing equipment, and store the certified information and the identification information in the verification memory section. The information storage server may also receive a query including the identification information, retrieve the certified information stored in the verification memory section, and verify the operating environment of the information processing equipment with reference to the certified information retrieved.

A certificate issuing server according to this invention may issue an electronic certificate to information processing equipment. The certificate issuing server may include a certification request receiving section that may receive a certification request of an operating environment of the information processing equipment; a certificate issuing section that may issue an electronic certificate to certify the operating environment of the information processing equipment based on the certification request received by the certification request receiving section; and a certificate transmitting section that may transmit the electronic certificate issued by the certificate issuing section to the information processing equipment.

The certificate issuing server may certify at least one of time when the information processing equipment operates as the operating environment and location where the information processing equipment operates as the operating environment.

Information processing equipment according to this invention may process information. The information processing equipment may include an information processing section that may process information and store the information as processed information; a certification requesting section that may transmit a certification request of an operating environment of the information processing equipment to a certificate authority serer that may issue an electronic certificate that certifies the operating environment of the information processing section; and an information outputting section that may receive the electronic certificate issued by the certificate issuing server in reply to the certification request transmitted by the certification request section, generate certified information based on the electronic certificate and the processed information as well as identification information to identify the certified information, and output the certified information and the identification information.

The information processing equipment may be a mobile security gadget that acquires information about a security target.

The information processing section may photograph an image, and store the image as the processed information.

The information processing section may weigh an object, and store a weight result as the processed information.

An information storage server according to this invention may include an information receiving section that may receive from information processing equipment certified information to certify an operating environment of the information processing equipment and identification information to identify the certified information; a storage memory section that may store the certified information and the identification information received by the information receiving section; and a certification outputting section that may receive a query including the identification information, retrieve the certified information stored in the storage memory section, output the certified information retrieved, and thereby certify the operating environment of the information processing equipment.

The storage memory section may further store an order of reception of the certified information and the identification information received by the information receiving section.

A verification unit according to this invention may include a verification receiving section that may receive certified information and identification information from an information storage server; a verification memory section that may store the certified information and the identification information received by the verification receiving section; and a verifying section that may receive a query including the identification information, retrieve the certified information stored in the verification memory section, and verify an operating environment of information processing equipment with reference to the certified information retrieved.

A certification system according to this invention may include information processing equipment that may process information; a certificate issuing server that may issue an electronic certificate to certify an operating environment of the information processing equipment; and an information storage server that may store information in a storage memory section. Then, the information processing equipment may transmit a certification request of the operating environment of the information processing equipment to the certificate issuing server. Then, the certificate issuing server may issue the electronic certificate to certify the operating environment of the information processing equipment based on the certification request of the operating environment transmitted from the information processing equipment. Then, the information processing equipment may receive the electronic certificate issued by the certificate issuing server, generate certified information based on the electronic certificate and processed information, and transmit the certified information to the information storage server. Then, the information storage server may receive the certified information from the information processing equipment, and store the certified information in the storage memory section. The information storage server may also receive identification information to identify the certified information, retrieve the certified information stored in the storage memory section based on the identification information received, and output the certified information retrieved.

Information processing equipment according to this invention may process information. The information processing equipment may include an information processing section that may process information, and store the information as processed information; a certification requesting section that may transmit a certification request of an operating environment of the information processing equipment to a certificate authority serer that may issue an electronic certificate that certifies the operating environment of the information processing section; and an information outputting section that may receive the electronic certificate issued by the certificate issuing server in reply to the certification request transmitted by the certification requesting section, generate certified information based on the electronic certificate and the processed information, and output the certified information generated.

An information storage server according to this invention may include an information receiving section that may receive certified information to certify an operating environment of the information processing equipment from information processing equipment; a storage memory section that may store the certified information received by the information receiving section; and a certification outputting section that may receive a query including identification information to identify the certified information, retrieve the certified information stored in the storage memory section, output the certified information retrieved, and thereby certify the operating environment of the information processing equipment.

### Effect of the Invention

According to the present invention, a certification system may be configured to include information processing equipment, a certificate issuing server, and an information storage server. The certificate issuing server may issue an electronic certificate to certify an operating environment of the information processing equipment based on a certification request from the information processing equipment of the certification system. The information processing equipment may generate certified information based on processed information and the electronic certificate. Also, the information processing equipment may transmit the certified information to the information storage server together with identification information for identifying the certified information. The information storage server may store the certified information for each piece of the identification information. Then, at a later date, the certified information may be retrieved and acquired from the information storage server based on the identification information. As a result, the certification system may certify the operating environment of the information processing equipment when the information processing equipment handled the processed information.

### Best Mode for Carrying out the Invention

### Embodiment 1.

With a first embodiment, a description will be given of a case of certifying the time (including "date" in this embodiment) when an image was taken and the site (hereinafter referred to also as "location") where the image was taken by a security guard on security patrol duty. Then, the authenticity of the time and site may be confirmed at a later time.

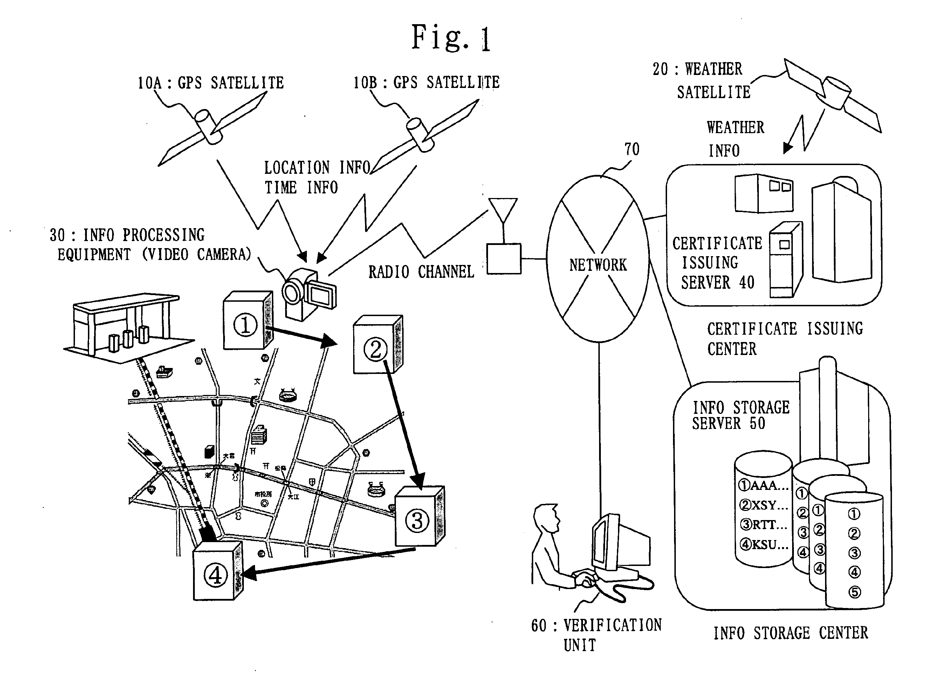

Fig. 1 is a diagram illustrating a configuration that is required for certifying the time when a specific image was taken and the site where the specific image was taken in security patrol rounds according to the first embodiment.
To certify patrolled time and site, the following are provided: a Global Positioning System (GPS) satellite 10 that supplies location information of an arbitrary point on the earth; a weather satellite 20 that photographs meteorological phenomena on the earth (e.g., cloud shapes) and supplies the images thereof; information processing equipment 30 (it is assumed here that a video camera is equipped with a function of the information processing equipment 30) that is carried by a security guard on security patrol duty; a certificate issuing server 40 that is installed at a certificate issuing center to certify time information and location information; an information storage server 50 that is installed at an information storage center to store certified time information and certified location information as well as an image as processed information having the certified time information and the certified location information being attached thereto; a verification unit 60 that verifies the authenticity of the time and site of that image; and a network 70 that interconnects the information processing equipment 30, the certificate issuing server 40, the information storage server 50, and the verification unit 60.

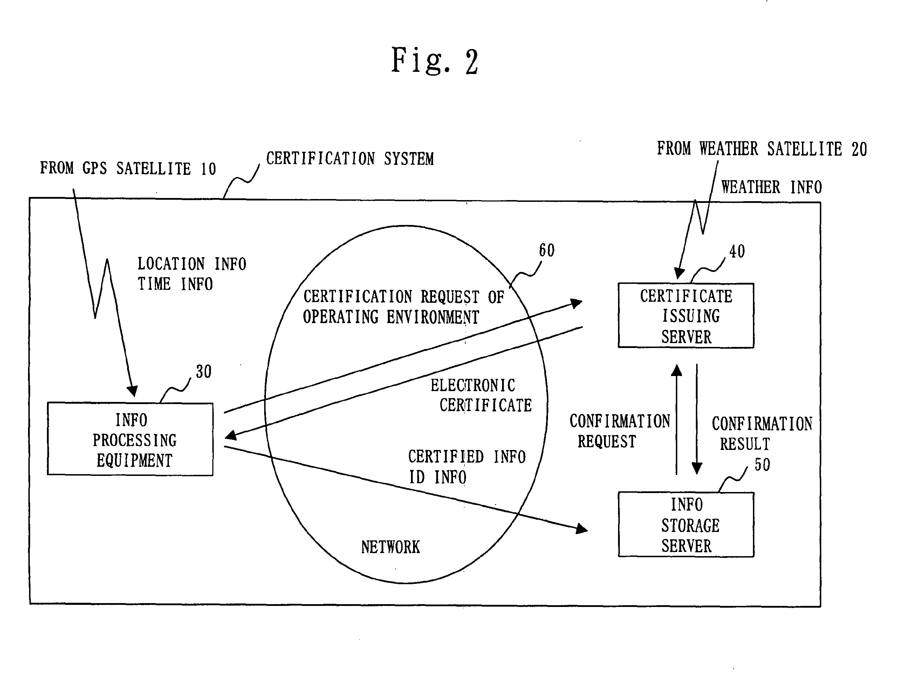

Fig. 2 shows the configuration of a certification system designed for security patrol according to this embodiment.
The certification system for security patrol is provided with the information processing equipment 30 to process information, the certificate issuing server 40 to issue an electronic certificate for certifying an operating environment of the information processing equipment, and the information storage server 50 to store information in a storage memory section (described later in detail).

The information processing equipment 30 is equipped with a video camera function. The information processing equipment 30 is used to take a video of a patrol site on security patrol duty to check for unusual situations. At the same time, the information processing equipment 30 acquires from the GPS satellite 10 the location information and the time information of the site where the video was taken.

It should be noted that the "operating environment" according to this embodiment indicates the time when a security guard took a video using the information processing equipment 30 equipped with a video camera function and the location where the video was taken. Also, the "processed information" here indicates information that is processed by the information processing equipment 30. In other words, since the information processing equipment 30 is equipped with a video camera function, a video image corresponds to the "processed information".

The certificate issuing server 40 certifies the time when the information processing equipment 30 operates and the location where the information processing equipment 30 operates, as the operating environment. Alternatively, the certificate issuing server 40 may certify as the operating environment at least one of the time when the information processing equipment 30 operates and the location where the information processing equipment 30 operates.

Therefore, the certificate issuing server 40 receives the location information and the time information from the information processing equipment 30. Then, the certificate issuing server 40 certifies the location information and the time information by using a "method of certifying that specific location information was acquired at a corresponding location" (discussed later in detail), and a "method of certifying that specific time information was acquired at a corresponding time" (discussed later in detail), respectively. Then, the certificate issuing server 40 transmits certified location information and certified time information to the information processing equipment 30 as an electronic certificate.

The information storage server 50 receives from the information processing equipment 30 and then stores the processed information, which is a video image taken in security patrol rounds, and the electronic certificate of the certified location information and the certified time information. In addition, the information storage server 50 makes a query to the certificate issuing server 40 about the authenticity of the electronic certificate of the certified location information and the certified time information issued by the certificate issuing server 40.

The information processing equipment 30 transmits a certification request of the operating environment thereof to the certificate issuing server 40. The certificate issuing server 40 issues the electronic certificate to certify the operating environment of the information processing equipment 30 based on the certification request of the operating environment transmitted from the information processing equipment 30. The information processing equipment 30, upon receipt of the electronic certificate issued by the certificate issuing server 40, generates certified information based on the electronic certificate and the processed information, and identification information for identifying this certified information. Then, the information processing equipment 30 transmits the certified information and the identification information to the information storage server 50. The information storage server 50 receives the certified information and the identification information from the information processing equipment 30 and then stores the certified information and the identification information received in a storage memory section. In addition, the information storage server 50 receives the identification information with a query for a verification request, then retrieves the certified information stored in the storage memory section, and outputs the certified information.

For this reason, the information processing equipment 30 may be a mobile security gadget that acquires information about a security target, such as a camera, a video camera, and a recorder.

The identification information is information that identifies which unit of the information processing equipment transmits which piece of the certified information at what time. The information storage server 50 may sometimes store many pieces of the certified information transmitted from two or more units of the information processing equipment. Therefore, the identification information is assigned to identify each piece of the certified information.

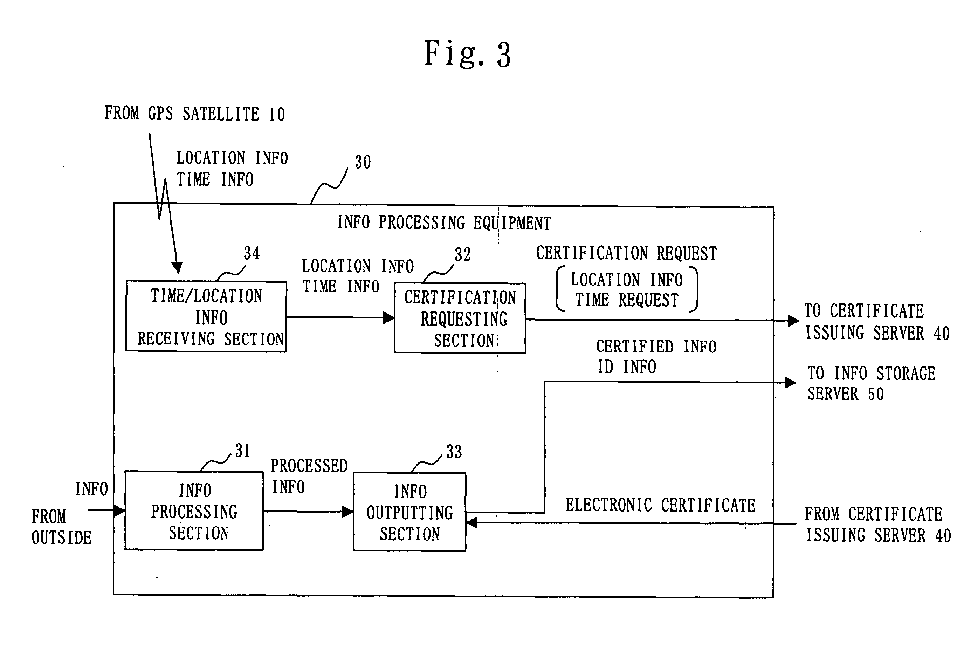

Fig. 3 is a diagram illustrating a configuration of the information processing equipment 30.
The information processing equipment 30, which processes information, includes: an information processing section 31 that processes information and stores it as the processed information; a certification requesting section 32 that transmits the certification request of the operating environment of the information processing equipment 30 to the certificate issuing server 40 that issues the electronic certificate for certifying the operating environment of the information processing section 31; and an information outputting section 33 that receives the electronic certificate issued by the certificate issuing server 40 in response to the certification request transmitted by the certification requesting section 32, and generates the certified information based on the electronic certificate and the processed information as well as the identification information for identifying this certified information, and outputs the certified information and the identification information generated. The information processing equipment 30 further includes a time/ location information receiving section 34 that receives the time information and the location information for specifying the operating environment from the GPS satellite 10.

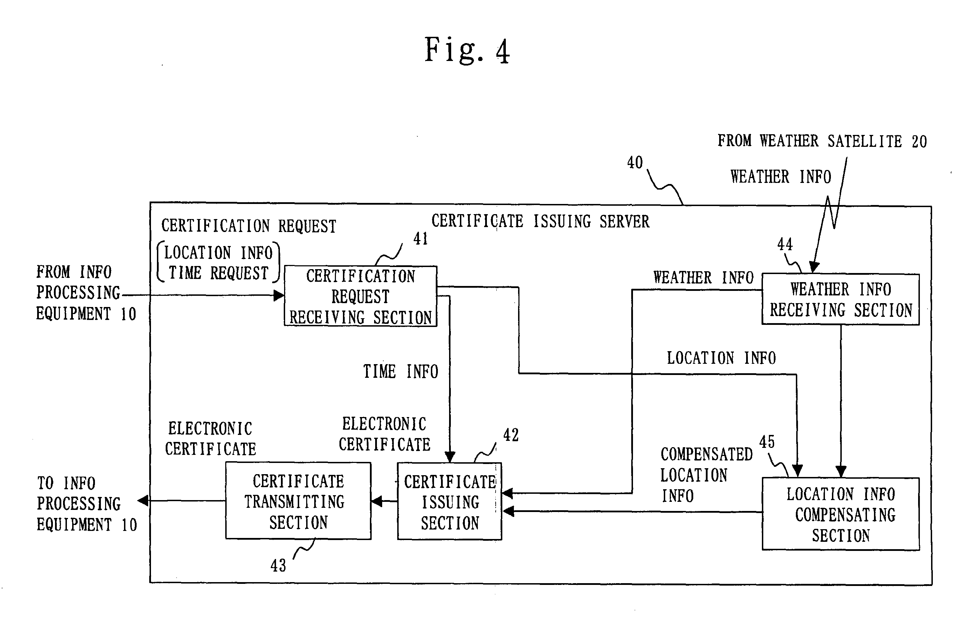

Fig. 4 is a diagram illustrating a configuration of the certificate issuing server 40.
The certificate issuing server 40, which issues the electronic certificate to the information processing equipment 30, includes: a certification request receiving section 41 that receives the certification request of the operating environment of the information processing equipment 30; a certificate issuing section 42 that issues the electronic certificate for certifying the operating environment of the information processing equipment 30 based on the certification request received by the certification request receiving section 41; a certificate transmitting section 43 that transmits the electronic certificate issued by the certificate issuing section 42 to the information processing equipment 30. The certificate issuing server 40 further includes a weather information receiving section 44 that receives weather information from the weather satellite 2 and a location information compensating section 45 that compensates the location information that is included in the certification request received by the certification request receiving section 41 to obtain accurate location information.

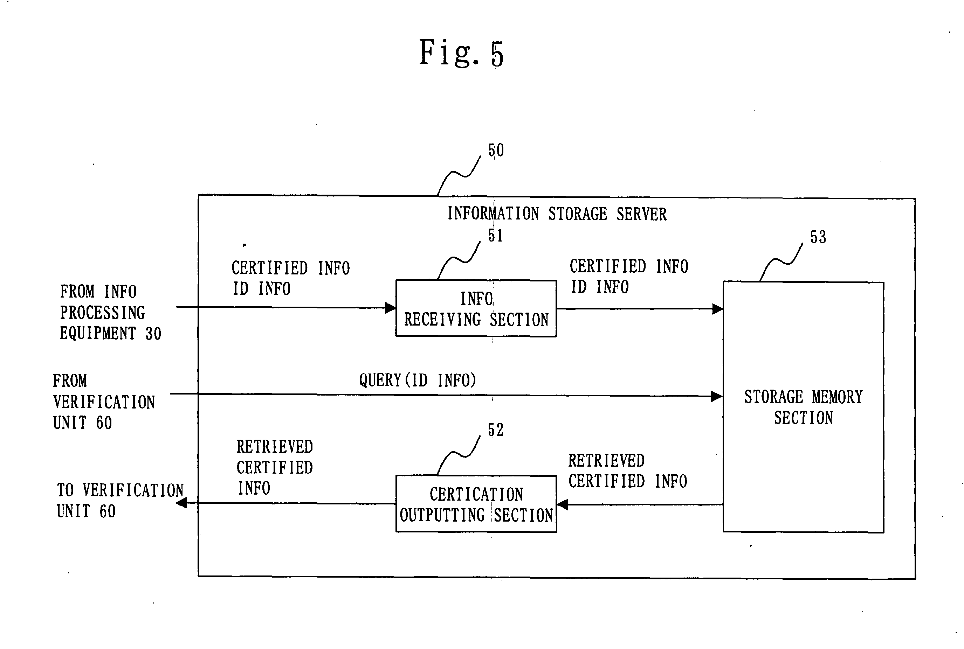

Fig. 5 is a diagram illustrating a configuration of the information storage server 50.
The information storage server 50 includes: an information receiving section 51 that receives from the information processing equipment 30 the certified information to certify the operating environment of the information processing equipment 30 and the identification information to identify this certified information; a storage memory section 53 that stores the certified information and the identification information received by the information receiving section 51; and a certification outputting section 52 that receives the query including the identification information, retrieves the certified information stored in the storage memory section 53, and outputs the certified information retrieved, thereby certifying the operating environment of the information processing equipment 30.

The storage memory section 53 further stores the order of reception of the certified information and the identification information received by the information receiving section.

A description will now be given of a process of certifying patrolled time and location on security patrol duty using the certification system designed for security patrol. In the following example, both patrolled time and location on security patrol duty are certified. Alternatively, however, either patrolled time or patrolled location may be certified.

The information processing equipment 30 acquires from the time/location information receiving section 34 the time information that indicates a current time and the location information that indicates the location of the information processing equipment 30. The information processing equipment 30 then transmits the time information and the location information acquired to the certificate issuing server 40 via the certification requesting section 32.

The certificate issuing server 40 receives the time information and the location information from the information processing equipment 30 via the certification request receiving section 41. The certificate issuing section 42 attaches unique data available at no other time than a specific time indicated by the time information to the time information. Also, the certificate issuing section 42 attaches unique data available at no other location than the specific location indicated by the location information to the location information. In that manner, the certificate issuing section 42 issues the electronic certificate for certifying time and location.

The location information compensating section 45 in the certificate issuing server 40 attaches compensation information for compensating a location indicated by the location information to the location information. The location information compensating section 45 thus issues the electronic certificate.

The information outputting section 33 in the information processing equipment 30 generates composite information that is made up of the electronic certificate received from the certificate transmitting section 43 in the certificate issuing server 40 and the processed information acquired by the information processing section 31. The information outputting section 33 then transmits the composite information to the information storage server 50 as the certified information.

The information receiving section 51 in the information storage server 50 receives the certified information and the identification information of the certified information from the information processing equipment 30 and stores the certified information and the identification information of the certified information in the storage memory section 53. In addition, the information receiving section 51, when a query for the verification request is transmitted, receives the query including the identification information, retrieves the certified information stored in the storage memory section 53, and outputs the certified information retrieved.

The information outputting section 33 in the information processing equipment 30 may alternatively generate the composite information that is made up of the electronic certificate and the processed information, calculate the hash value of the composite information, and transmit the hash value to the information storage server 50 as the certified information.

The information receiving section 51 in the information storage server 50 receives the certified information as the hash value of the composite information and the identification information of the certified information from the information processing equipment 30 and stores the certified information as the hash value of the composite information and the identification information of the certified information in the storage memory section 53. Then, at a later date, the information receiving section 51 receives the composite information, calculates the hash value of the composite information, and then compares the hash value with previously received certified information. If they match, the composite information is stored in the storage memory section 53 in correspondence with the identification information. At the time of verification, the information receiving section 51 receives a query including the identification information, retrieves the composite information stored in the storage memory section 53, and then outputs the composite information retrieved. The "composite information retrieved" of this specific case corresponds to "retrieved certified information" shown in Fig. 5.

It should be noted that the certificate issuing server 40 and the information storage server 50 may be one unit.

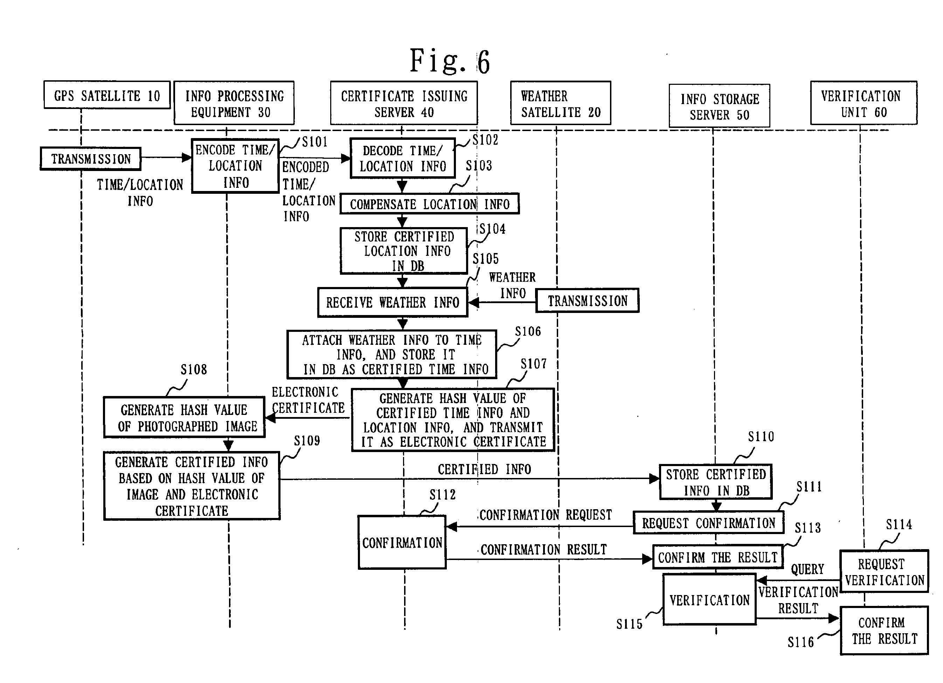

A description will now be given of a process of certifying the time when an image was taken by a security guard on security patrol duty and the location where the image was taken in detail. Fig. 6 is a diagram illustrating a process of certifying at which site a specific image was taken by a security guard at which time on security patrol duty.

A security guard takes a video of the security condition at each site on security patrol duty using the information processing equipment 30 that is equipped with a video camera function. The information processing equipment 30 receives the time information and the location information of that specific site from the GPS satellite 10. Then, the information processing equipment 30 encodes the time information and the location information for the purpose of prevention against tampering and leakage. Then, the information processing equipment 30 transmits encoded time information and encoded location information to the certificate issuing server 40 via a radio channel of a wireless LAN (not shown), a mobile phone (not shown), or the like and the network 70 (Step S101).

The execution of this process may be started manually by a security guard, or automatically at certain time intervals by the information processing equipment 30. Or, otherwise, given the fact that the time information and the location information are constantly received from the GPS satellite 10, only the transmission to the certificate issuing server 40 of the time information and the location information received may be executed by the manual operation of a security guard, the automatic operation at certain time intervals, or the like.

The certificate issuing server 40 decodes the encoded time information and the encoded location information received from the information processing equipment 30 (Step S102). Then, the certificate issuing server 40 performs a compensation process for compensating a location included in the location information more accurately (Step S103). Subsequently, the certificate issuing server 40 executes a "method of certifying that specific location information was acquired at a corresponding location" (discussed later in detail) and a "method of certifying that specific time information was acquired at a corresponding time" (discussed later in detail).

A description will now be given of the "method of certifying that specific location information was acquired at a corresponding location" in detail. The time/location information receiving section 34 in the information processing equipment 30 receives sets of position codes and carrier waves from a plurality of radio receiving GPS satellites 10 capable of receiving radio waves. The certification requesting section 32 in the information processing equipment 30 encodes, with its own ID as an encryption key, received sets of position codes and carrier waves together with positioning satellite identification numbers received. Then, certification requesting section 32 transmits encoded sets with encoded identification number to the certificate issuing server 40 as the location information.

In the meantime, for the purpose of providing the location information with accuracy, additional information other than the location information acquired from GPS satellites 10 may be acquired. The additional information may include: natural phenomenon information that is available at a specific location about temperature, humidity, atmospheric pressure, altitude, wind velocity, or the like; and environmental information that may be acquired via a means of communication such as base station information. Then, the additional information is transmitted to the certificate issuing server 40, so that the identity of the location is made clear. In addition, for the purpose of effective prevention against spoofing, instead of always transmitting all acquired data, in interactions with the certificate issuing server 40 using encryption means, data may be selected and only selected data may be transmitted, which is similar to a method using encryption means.

The certification request receiving section 41 in the certificate issuing server 40 receives the location information from the information processing equipment 30, and decodes the location information and then transmits decoded location information to the certificate issuing section 42. The certificate issuing section 42 calculates the location of the information processing equipment 30, which requested the certification of the location information, based on the decoded position codes, carrier waves, and identification numbers of the positioning satellites. Then, the certificate issuing section 42 stores a calculation result in a database provided in the certificate issuing server 40 (Step S104). For this location calculation, any generally known method may be utilized.
The certificate issuing section 42 then generates a certificate to certify the calculated location of the information processing equipment 30. The certificate issuing section 42 then provides the certificate with copy guard for the purpose of prevention against tampering, and transmits the certificate to the information processing equipment 30. It should be noted that the generated certificate certifies an ID unique to each terminal. Any generally known method may be employed as the copy guard method.

By thus calculating a location based on the identification numbers, position codes, and carrier waves of the GPS satellites 10 that are available at no other location than a specific location at no other time than a specific time, a fact of existence at that specific location and at the specific time may be certified.

A description will now be given of the "method of certifying that specific time information was acquired at a corresponding time" in detail. To certify that specific time information is acquired at a corresponding time, the invention of certifying time disclosed in Patent Document 3 is utilized, for example. According to this invention, the authenticity of a specific time that needs certification is certified with an attachment of the natural phenomenon (weather information, here) that occurred at that specific time to specific time information.

The certificate issuing server 40 receives the weather information (cloud shapes, specifically) that was photographed by a weather satellite at a specific time indicated by the decoded time information (Step S105). Then, the certificate issuing server 40 attaches the weather information to the time information, and stores the time information in a database provided therein as certified time information (Step S106).

The certificate issuing server 40 generates a hash value of the certified time information and the certified location information utilizing a hash function. This hash value is a unique value determined based on the natural phenomenon information, time information, and location information. Since the hash function is a one-way function, the hash value is irreversible. The hash value is transmitted to the information processing equipment 30 as the electronic certificate of the time information and the location information by the certificate issuing server 40 (Step S107).

The information processing equipment 30 generates the hash value of the video image (Step S108). Then, the information processing equipment 30 attaches the electronic certificate of the time information and the location information received from the certificate issuing server 40 to the hash value of the video image, and thereby generates the certified information. Then, the information processing equipment 30 transmits the certified information to the information storage server 50 together with the identification information (Step S109).

The information storage server 50, upon receipt of the certified information from the information processing equipment 30, assigns a unique number, such as the order of reception, to the certified information. Then, the information storage server 50 stores the certified information in a database provided in the information storage server 50 (Step S110). Subsequently, the information storages server 50 requests the certificate issuing server 40 to confirm whether or not the certified time information and the certified location information included in the certified information received are the ones that the certificate issuing server 40 generated (Step S111).

The certificate issuing server 40, upon request of the confirmation from the information storage server 50, confirms whether the certified time information and the certified location information received are the ones the certificate issuing server 40 generated or not (Step S112). Then, the certificate issuing server 40 transmits the confirmation result to the information storage server 50 (Step S113).

Then, at a later time when the need arises to verify the time when the specific image was taken by a security guard on security patrol duty and the site where the specific image was taken, a verifier makes a query to the information storage server 50 using the verification unit 60 (Step S114). The information storage server 50 performs a verification and then transmits a verification result to the verification unit 60 (Step S115). The verification unit 60 receives the verification result and the verifier confirms the content thereof (Step S116).

According to this embodiment, the information processing equipment, by utilizing the electronic certificate for certifying the operating environment of the information processing equipment that was issued by the certificate issuing server, may certify the operating environment in which the information processing equipment handled the processed information. Also, by storing in the information storage server the processed information and the operating environment in which the processed information was handled by the information processing equipment, the operating environment in which the processed information was handled by the information processing equipment may be verified.

According to this embodiment, it becomes possible to certify the authenticity of the time when a specific video image was taken in security patrol rounds and the location where the specific video image was taken. As a result, the video image may have the quality of evidence, and thereby be utilized in a trial or the like.

According to this embodiment, the information processing equipment, by utilizing the electronic certificate issued by the certificate issuing server for certifying the operating time of the information processing equipment, may certify the time when the information processing equipment handled the processed information.

According to this embodiment, the information processing equipment, by utilizing the electronic certificate issued by the certificate issuing server to certify the location where the information processing equipment operates, may certify the location where the information processing equipment handled the processed information.

According to this embodiment, the information processing equipment, by utilizing the certificate generated with the unique data available at no other time than a specific time attached to the time information by the certificate issuing server, may certify the time when the information processing equipment handled the processed information.

According to this embodiment, the information processing equipment, by utilizing the certificate generated with the unique data available at no other location than a specific location where the information processing equipment existed attached to the location information by the certificate issuing server, may certify the location where the information processing equipment handled the processed information.

According to this embodiment, the information processing equipment, by utilizing the compensation information to compensate the location indicated by the location information, may certify the location where the information processing equipment handled the processed information with more accuracy.

According to this embodiment, the information processing equipment may transmit to the information storage server the processed information and the electronic certificate to certify the specific time when the processed information was handled and the specific location where the processed information was handled. Then, the information storage server may store the processed information and the electronic certificate therein. Then, at a later date, a verifier may verify the authenticity of the time when the processed information was handled and the location where the processed information was handled.

According to this embodiment, the information processing equipment, by using the hash value of the processed information and the electronic certificate to certify the specific time when the processed information was handled and the specific location where the processed information was handled as the data transmitted to and stored in the information storage server, may reduce the amount of data to be transmitted and stored. This may also protect data from leakage and tampering during transmission.

According to this embodiment, the configuration of the certification system may be simplified. The cost of system construction and operation required may also be reduced.

According to this embodiment, the certificate issuing server of the certification system may be configured to include the certification request receiving section, the certificate issuing section, and the certificate transmitting section.

According to this embodiment, the certificate issuing server may certify the time when the information processing equipment operates and the location where the information processing equipment operates.

According to this embodiment, the information processing equipment of the certification system may be configured to include the information processing section, the certification requesting section, and the information outputting section.

According to this embodiment, a mobile security gadget that acquires information about a security target during security patrol rounds may be utilized as the information processing equipment.

According to this embodiment, the information storage server of the certification system may be configured to include the information receiving section, the storage memory section, and the certification outputting section.

According to this embodiment, the information storage server may manage the certified information and the identification information in the order of reception, which allows the certified information and the identification information searchable and retrievable.

According to this embodiment, real time acquisition is allowed of a current location of a security guard on security patrol duty, a patrolled route, and a state of progress of security patrol duty by utilizing the time information and the location information that are transmitted from the information processing equipment.

According to this embodiment, images may be provided with the quality of evidence by the attachment of the certified time information and the certified location information. This may contribute to early settlement of an incident or an accident as well as early completion of trials.

Conventionally, images are taken by physical films and by physical recording, which gives the evidence value to the images. Digital data, however, has little quality of physical proof and thereby the quality of evidence is low. Now, if data about natural phenomena is added to such digital data, a physical link is created. Then, if being encoded, and signed by a tamper resistant terminal that receives the certified data, the digital data improves its quality of proof. Hence, a storage mechanism can be developed whereby the quality of proof of digital data may be secured as evidence.

With further reference to this embodiment, this embodiment is one type of patrol means designed for security in patrol surveillance. The equipment that specifies a patrolled location and acquires information to certify a specified location is carried along. Then, the patrolled time and location is certified by information collected by the equipment. Then, by taking images such as still images and video images of that specific site by the information processing equipment, it may be certified that the security patrol duty has been duly performed at the specific site. Furthermore, by adding tamper proof means to information about still pictures or video images, and recorded voices, a still picture or video image taken at a specific patrolled site at a specific time may be used as evidence in a report of performance of a security patrol duty.

Furthermore, the terminal that is carried in security patrol rounds includes: the photographic means for taking videos and pictures; the means of recording voices; the means for acquiring information transmitted from satellites that is available at no other time and location than a particular time and location, and acquiring the location information of the satellites to certify the location; the function to transmit the information to the information storage server; the communication means for acquiring the certification information of time transmitted from the certificate issuing server; the means for storing acquired information; the means for embedding the acquired information in photographed image data or video image data; and the function to identify the terminal from among other terminals.

By certifying the time when a specific image was taken by a patroller on security patrol duty and the location where the specific image was taken, video images, still pictures, and voices may be utilized as evidence in the reports of security patrol duty.

By reporting the location of a patroller in security patrol rounds to the control center at every patrolled location, a patrolled route of the patroller may be certified, and the center side may take hold of the location of the patroller.

The photographic equipment holds the electronic certificate to certify the time and location transmitted from the certificate issuing server, incorporates the electric certificates with image data, and adds an electronic signature thereto, thereby preventing tampering. Then, the data is transmitted to the information storage server. The information storage server numbers and stores the data in the order of reception, thereby certifying that received images were photographed before the specified time and date.
Furthermore, the information storage server confirms the certificate issuing server whether or not the certificate issuing server transmitted the electronic certificate for certifying time and location to registered equipment. In addition, it may enhance the quality of proof of images if serial numbers are also transmitted to the certificate issuing server, or the serial numbers are laid open to outside groups.

If the certificate issuing server and the information storage server are separated from each other, digital data operation may be performed under independent management. Hence, highly confidential operation and management may be achieved.

Conventionally, in a security patrol report, visual information is presented orally or in writing. However, the report based on video information and audio information with certification to certify the time, the location and the tamper proof condition may become available. Hence, real time secured information may be provided.

Only to transmit real time video and audio with certified time and location to an integrated command center where security patrol duty is managed or to customers eliminates the necessity of transmitting the time information and the location information at the same time. Hence, by providing experts in disaster prevention, crime prevention, accident, or the like with proper information to seek directions in emergency, work may be carried out under real time direction of accident treatment or disaster response.

This mechanism may be applied directly to robots. If a robot is equipped with a function to record and transmit a video and an audio with certification to certify the time information and the location information, it becomes possible to handle security matters or disaster prevention matters that are beyond human capability.

Security patrol cars may be managed by the certification of time and location, and security guards may be managed collectively by the certification of time and location at the center. Hence, the location information of all security patrol cars and all security guards may be managed for the purpose of emergency assistance.

The photographic equipment may have an automatic information transmitting function. Hence, safe conditions of security guards may be confirmed together with their activities.

If encoded information is changed when the equipment is updated automatically, the spoofing of the photographic equipment may be prevented, which ensures safety in photographing with electronic data.

The equipment may be tamper resistant. Accordingly, the equipment may be configured to lose all of its functions if components are removed for the purpose of disassembling or conversion. Hence, security of use of the equipment may be ensured.

### Embodiment 2.

A second embodiment describes a case of certifying a patrolled time and a patrolled location in security patrol rounds to certify the fact that a security guard has duly performed a security patrol duty. According to this embodiment, all that is required is to certify that a security guard existed at a specific location and at a specific time. Therefore, all that is required here is to show that information processing equipment has acquired and held time information and location information that are available at no other time and location than a specific time and site.

A configuration that is required for certifying a patrolled time and a patrolled site by a security guard on security patrol duty is the same as that shown in Fig. 1 discussed in the first embodiment. Also, a certification system to be used here is the same as that shown in Fig. 1 discussed in the first embodiment. The function and configuration of each unit of equipment used here is the same as that of Fig. 1 according to the first embodiment.

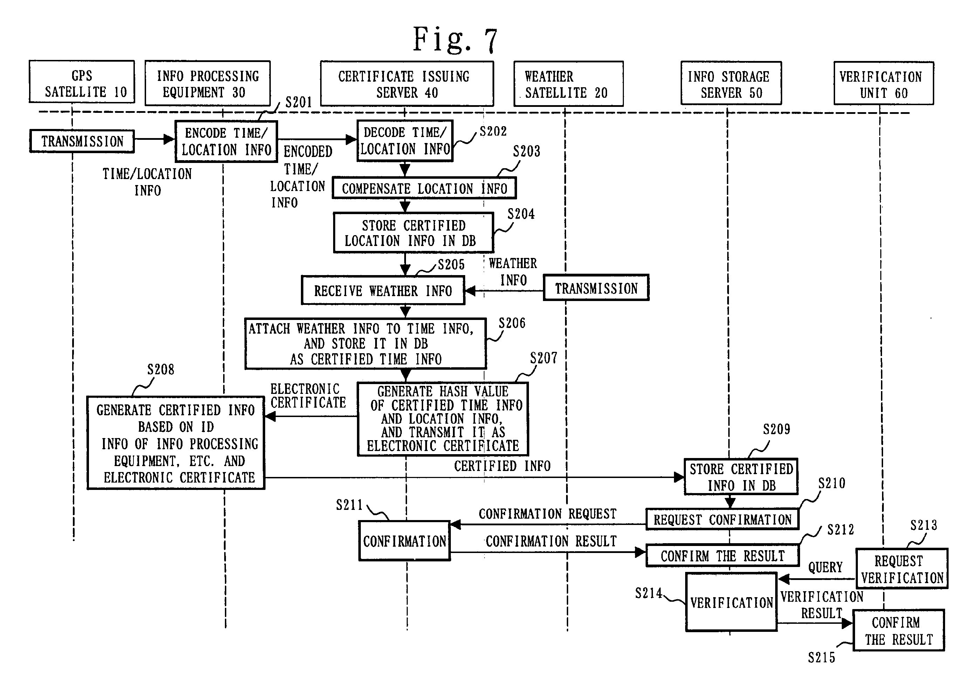

Now, a description will be given of a process of certifying a patrolled time and a patrolled location by a security guard on security patrol duty. Fig. 7 is a diagram illustrating a process of certifying a patrolled time and a patrolled location by a security guard on security patrol duty.

A security guard presets his or her own identification information (ID information) in the information processing equipment 30 by prior arrangement. It should be noted that the information processing equipment also stores its own identification information (ID information).

The security guard conducts a patrol at each site, carrying information processing equipment 30 with him or her. In the meantime, the information processing equipment 30 receives the time information and the location information of that specific site from the GPS satellite 10. Then, the information processing equipment 30 encodes the time information and the location information for the purpose of prevention against tampering and leakage. Then, the information processing equipment 30 transmits encoded time information and encoded location information to the certificate issuing server 40 via a radio channel, such as a wireless LAN and a mobile phone, which are not shown in the figures, and the network 70 (Step S201).

The execution of this process may be started manually by a security guard, or automatically at certain time intervals by the information processing equipment 30. Or, otherwise, given the fact that the time information and the location information are constantly received from the GPS satellite 10, only the transmission to the certificate issuing server 40 of the time information and the location information received may be executed by the manual operation of a security guard, the automatic operation at certain time intervals, or the like.

The certificate issuing server 40 decodes the encoded time information and the encoded location information received from the information processing equipment 30 (Step S202). Then, the certificate issuing server 40 performs a compensation process for compensating a location included in the location information more accurately (Step S203). Subsequently, the certificate issuing server 40 implements the method of certifying that specific location information was acquired at a corresponding location and the method of certifying that specific time information was acquired at a corresponding time.

The method of certifying that specific location information was acquired at a corresponding location of this embodiment is the same as that discussed in the first embodiment. (The process of Step S204 is the same as that of Step S104 of the first embodiment.) The method of certifying that specific time information was acquired at a corresponding time is the same as that discussed in the first embodiment. (The processes of Step S205 and Step S206 are the same as those of Step S105 and Step S106, respectively, of the first embodiment.)

The certificate issuing server 40 using a hash function generates the hash value of certified location information and certified time information including natural phenomena information. Generated hash value is transmitted to the information processing equipment 30 as the electronic certificate of the location information and the time information by the certificate issuing server 40 (Step S207).

The information processing equipment 30 receives the electronic certificate of the time information and the location information from the certificate issuing server 40. Then, the information processing equipment 30 attaches the electronic certificate to the identification information of the security guard and the identification information of the information processing equipment 30, and thereby generates certified information. Then, the information processing equipment 30 transmits the certified information to the information storage server 50 together with identification information to identify the certified information (Step S208).

The information storage server 50, upon receipt of the certified information or the hash value thereof from the information processing equipment 30, assigns a unique number, such as the order of reception thereto. Then, the information storage server 50 stores the certified information or the hash value in a database provided in the information processing equipment 30 (Step S209). Then, the information storage server 50 requests the certificate issuing server 40 to confirm whether or not the time information and the location information received are the ones the certificate issuing server 40 generated (Step S210).

The certificate issuing server 40, upon receipt of the confirmation request from the information storage server 50, confirms the authenticity of the certified time information and the certified location information (Step S211). Then, the certificate issuing server 40 transmits the confirmation result to the information storage server 50 (Step S212).

Then, at a later time when the need arises to verify a patrolled time and a patrolled location by a security guard on security patrol duty, then a verifier makes a query about the patrolled time and the patrolled location to the information storage server 50 using the verification unit 60 (Step S213). The information storage server 50 performs a verification and transmits a verification result to the verification unit 60 (Step S214). The verification unit 60 receives the verification result. Then, the verifier confirms the content of the verification result (Step S215).

According to this embodiment, there is no need of installing a special device for certifying a patrolled time and a patrolled site by prior arrangement for certifying the patrolled time and the patrolled site. In addition, any site of security patrol rounds may be certified without limitation to predetermined sites. Furthermore, the certified time information and the certified location information may be protected from counterfeiting or tampering not only by the party concerned but also by a third party.

This embodiment is applicable not only to the case of certifying that a security guard has duly conducted a security patrol, but also to a case of certifying that a person or a mobile object has followed a prescribed route properly.

For example, it may be applied in freight transfer services by long distance trucks to confirming which point a truck ran through at what time. It may also be applied in a race such as orienteering to confirming which point a contestant or a player ran through at what time. It may also be applicable in a stamp rally. Instead of using a stamp, information for identifying an electronic certificate may be outputted via a printer or the like, and thus a participant may confirm which point the person visited at what time. It may also be applied in bus or streetcar services. It is recorded that at which stop or point a passenger got on a vehicle and at which stop or point the person left the vehicle, or at which time a passenger got on a vehicle and at which time the person left the vehicle. Then, fare calculation may be made based on distance traveled, stage length, travel time, and the like, and charge the fare automatically. Hence, flexible fare setting may be achieved. Instead of being carried by a traveling person or a mobile object, however, the information processing equipment 30 may be placed at two or more sites by prior arrangement. The process of Fig. 7 may be performed at the time when a communication is established between communication equipment (e.g., a wireless tag) carried by a person or a mobile object and the information processing equipment 30 (e.g., a wireless reader).

### Embodiment 3.

A third embodiment utilizes the same certification system as that discussed in the first embodiment. According to the third embodiment, for the purpose of illegal parking crackdown, the time when the photo of an illegally parked vehicle was taken by a policeman or the like on patrol duty and the location where the photo was taken in a specific area are certified to check the authenticity of the time and the location at a later time.

According to this embodiment, the information processing equipment 30 shown in Fig. 1 of the first embodiment may be electronic equipment that is equipped with a function to take photos (images), such as a digital camera.

In this embodiment, a person who clamps down on illegal parking vehicles, such as a policeman, takes photos of illegally parked vehicles by using the information processing equipment 30 that is equipped with a camera function. The information processing equipment 30 acquires an electronic certificate issued by the certificate issuing server 40 through the processes of Step S101 to Step S107 shown in Fig. 6 discussed in the first embodiment. Then, the information processing equipment 30 generates certified information based on the photo of an illegally parked vehicle and the electronic certificate acquired. Then, the information processing equipment 30 transmits the certified information to the information storage server 50. In Step S110, the information storage server 50 receives and stores in a database the certified information. Through the processes of Step S111 to Step S113, the information storage server 50 performs a confirmation process with the certificate issuing server 40.

In Step S101, the information processing equipment 30 may additionally acquire information about surrounding objects or distance information based on a focal length when a photo is taken so as to compensate the location information automatically.

When the need arises to verify the time when the photo of an illegally parked vehicle was taken and the site where the photo was taken, a verifier makes a query to the information storage server 50 using the verification unit 60 in Step S114 and the subsequent steps. The information storage server 50 performs a verification and transmits a verification result to the verification unit 60. The verification unit 60 receives the verification result. The verifier confirms the content of the verification result. Hence, the photo of an illegally parked vehicle may attest to the fact that the vehicle had surely been parked illegally.

It is another possibility of the verification process that the verification unit 60 acquires the photo of an illegally parked vehicle from the information storage server 50 as the certified information, and the verifier verifies the photo visually. Then, map information may be inputted to the verification unit 60 by prior arrangement, and the background of the photo of the illegally parked vehicle may be compared with the map information, for example. In this case, the reliability of the location information and the time information may be enhanced. It is another possibility that the photograph position may be adjusted when taking a photo so that more characteristic background features are included in the photo. A panoramic photo (360 degrees panoramic view) may also be taken to include more background objects in the photo. Hence, a visual verification may be performed easily.

Thus, the time when a person took a photo on patrol duty and the location where the person took the photo in an area may be certified. Then, at a later time, the authenticity of the time when the person took the photo and the location where the person took the photo may be confirmed.

This embodiment is also applicable to other cases than attesting to the fact of illegal parking. For example, under a real estate lease agreement, there may be a claim for restitution of the building interior to its original condition at the end of the agreement when the tenant moves out. In this case, it is hard to distinguish whether specific damage was done before or after the tenant moved in. This had resulted in quite a number of cases of dispute over a repair needed between the superintendent of the property and the tenant. Now, the aforementioned system is available in this situation. Specifically, the building interior is photographed by the information processing equipment 40 when the tenant moves in. Then, a photo of the building interior to which the certification of time and location is attached is stored in the information storage server 50. Thus, the building interior condition before the tenant moves in may be confirmed at a later time. The same may be applied to the case of repair, checkout, inspection, or the like of automobile. An automobile is photographed right before a repair, checkout, or inspection by the information processing equipment 40. Then, a photo of the automobile to which the certification of time and location is attached is stored in the information storage server 50. Hence, it becomes possible to attest to the fact that automobile damage was done during a repair, checkout, or inspection, or the fact that the automobile was dishonestly repaired, checked out, or inspected.

### Embodiment 4.

A fourth embodiment utilizes the same certification system as that discussed in the third embodiment. According to the fourth embodiment, for the purpose of certifying that the person has visited a specific exhibition or the like, the time when the photo of a visitor was taken and the location where the photo was taken at an exhibition are certified to check the authenticity of the time and location of the photo at a later time.

According to this embodiment, an exhibition attendant or a booth attendant takes photos of visitors using the information processing equipment 30 that is equipped with a camera function. The information processing equipment 30 generates certified information based on the visitors' photos and electronic certificate issued by the certificate issuing server 40. The information storage server 50 stores the certified information. A verifier makes a query to the information storage server 50 using the verification unit 60. The information storage server 50 makes verification and transmits a verification result to the verification unit 60. The verification unit 60 receives the verification result. The verifier confirms the content of the verification result. Hence, it becomes possible to attest to the fact that a specific person had visited a specific exhibition or the like by using the photo of the visitor.

Just like the above mechanism, it is also possible to attest to the fact that a person had visited a specific sightseeing area, a specific attraction had been held, a specific lecture class had started or ended, or the like by using the certification system of this embodiment.

Thus, the time and location of the photo of a person that was taken while the person visited a specific place may be certified, and at a later time, the authenticity of the time and location of that photo may be confirmed.

### Embodiment 5.

Currently, ID photos may be taken and printed by means of ID photo machines that are installed at railway stations, department stores, or the like. For a passport application, or the like, there may be a regulation that an ID photo must be taken within the last six months of submission date, for example. However, such photos, when submitted, cannot self-certify that they were taken within the last six months of the submission date.

According to a fifth embodiment, the same certification system as that discussed in the third embodiment is utilized for certifying the time when an ID photo (a photo used for identifying oneself) was taken and for confirming the time of the ID photo at a later time.

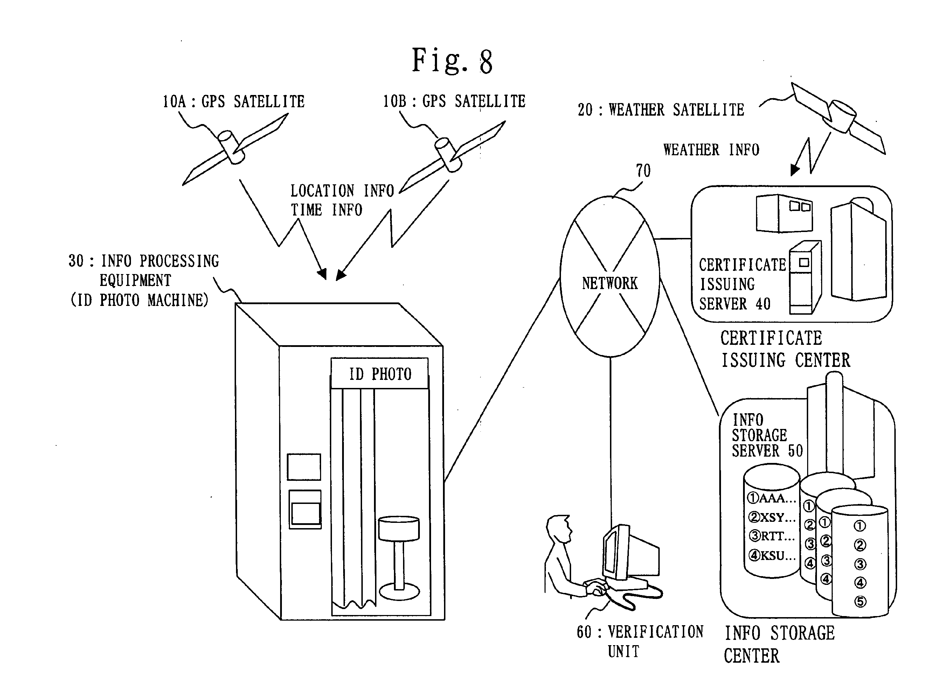

According to this embodiment, as shown in Fig. 8, an ID photo machine as the information processing equipment 30 is connected to the network 70. The other elements are the same as those discussed in the third embodiment.

The information processing equipment 30 is the same in configuration as that of Fig. 3 discussed in the first embodiment.

With this embodiment, a user takes his or her own ID photo by using the information processing equipment 30 of the ID photo machine. The information processing equipment 30 acquires a certification code, which is made up of numerals and signs, as the electronic certificate issued by the certificate issuing server 40 through the processes of Step S101 to Step S107 shown in Fig. 6 discussed in the first embodiment. Then, the information processing equipment 30 generates certified information based on an ID photo taken and the certification code acquired. Then, the information processing equipment 30 transmits the certified information to the information storage server 50. Also, the information processing equipment 30 prints the ID photo and also prints the certification code on the face or reverse side of the ID photo. Then, in Step S110, the information storage server 50 receives and stores in a database the certified information. Through the processes of Step S111 to Step S113, the information storage server 50 performs a confirmation process with the certificate issuing server 40.

When the need arises to verify the time when the ID photo was taken and the site where the ID photo was taken, a verifier makes a query to the information storage server 50 using the verification unit 60 in Step S114 and the subsequent steps. The information storage server 50 performs a verification and transmits a verification result to the verification unit 60. The verification unit 60 receives the verification result. Then, the verifier confirms the content of the verification result. It should be noted that the verification result includes information about the time of the verified ID photo when it was photographed, and information indicating whether or not the ID photo was taken within the last six months, for example. Hence, if there is a time limitation for ID photo production, an ID photo can self-certify whether or not it is valid within the limitation.

The following is also possible, instead of a user submitting an ID photo and a verifier performing the verification mentioned above. If no ID photo is submitted by a user, a verifier may acquire ID photo data from the information storage server 50 using the verification unit 60 or the like, and then print the ID photo.

The time when a photo was taken may thus be certified. Then, if there is a regulation of time of photography, it may be confirmed whether or not the regulation is followed.

The present embodiment is also applicable to cases other than certifying the time when an ID photo was produced. For example, a certification code like the one mentioned above is prestored in an IC credit card. When a customer makes a payment at a shop, a shop assistant reads the certification code using a checkout terminal and acquires a photo from the information storage server 50. The shop assistant compares the photo displayed on the checkout terminal with the user of the IC credit card. Thus, the shop assistant may confirm the identity of the customer. Another case is that when a payment is made, a checkout terminal acquires a new certification code from the certificate issuing server 40, and generates certified information from information about purchased products, the amount of money for the payment, etc. and the certification code. Then, the checkout terminal registers the certified information in the information storage server 50, and at the same time prints the certification code on the receipt. Hence, a customer is allowed to confirm the account history of the person using the certification code at a later time.

### Embodiment 6.

A sixth embodiment utilizes a certification system designed for this embodiment. According to the sixth embodiment, for the purpose of a marshal (policeman) or the like confirming the identity of a passenger on board an airplane, the time when the passenger was photographed and the location where the passenger was photographed are certified to check whether or not the passenger on board is the one on the photo.

Just like the one discussed in the fifth embodiment, an ID photo machine is connected to the network 70 as the information processing equipment 30 as shown in Fig. 8 according to this embodiment.

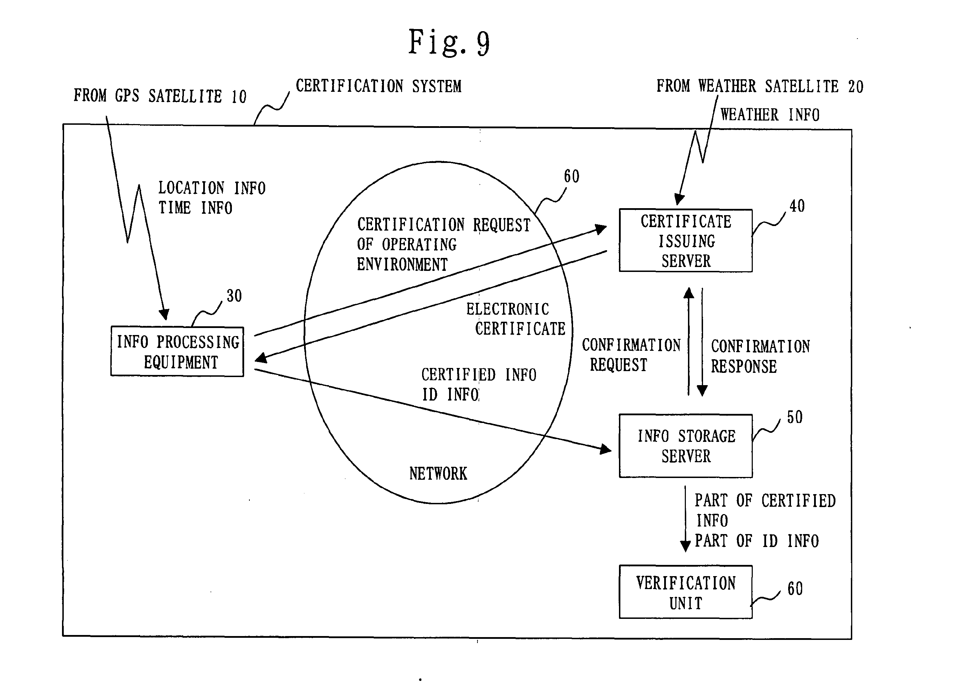

Fig. 9 shows the configuration of a certification system according to this embodiment.

The verification unit 60 of this embodiment is part of the certification system. The verification unit 60 acquires and stores in a database part of certified information and part of identification information that are stored in an information storage server 50. The other elements are the same as those discussed in the fifth embodiment.

The information processing equipment 30 and the certificate issuing server 40 of this embodiment are the same in configuration as those discussed in the fifth embodiment.

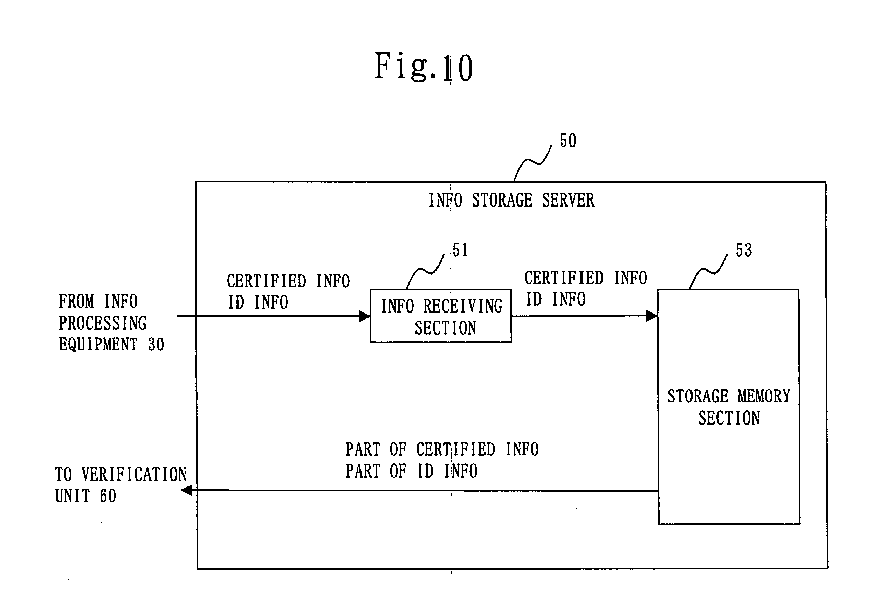

Fig. 10 is a diagram illustrating the configuration of an information storage server 50.

The information storage server 50 includes an information receiving section 51 that receives from the information processing equipment 30 the certified information to certify the operating environment of the information processing equipment 30 and the identification information to identify this certified information, and a storage memory section 53 that stores the certified information and the identification information received by the information receiving section 51. The part of the certified information and the part of the identification information stored in the storage memory section 53 are transmitted to the verification unit 60.

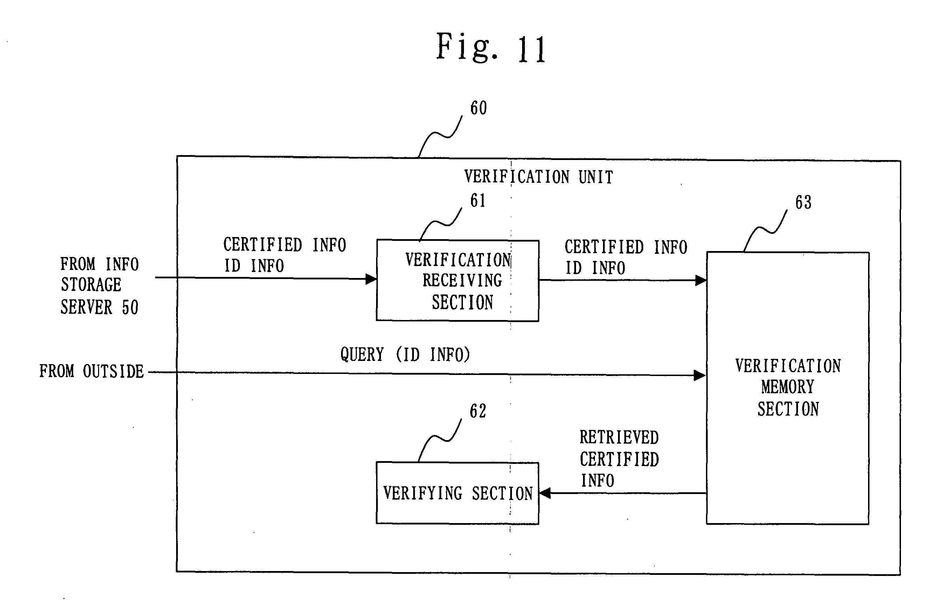

Fig. 11 is a diagram illustrating a configuration of the verification unit 60.

The verification unit 60 includes: a verification receiving section 61 that receives from the information storage server 50 the certified information and the identification information for identifying this specific certified information; a verification memory section 63 that stores the certified information and the identification information received by the verification receiving section 61; and a verifying section 62 that receives a query including the identification information and verifies the certified information stored in the verification memory section 63.

Just like the fifth embodiment, the information outputting section 33 in the information processing equipment 30 generates certified information that is made up of the electronic certificate received from the certificate transmitting section 43 in the certificate issuing server 40 and the processed information acquired by the information processing section 31. The information outputting section 33 then transmits the certified information to the information storage server 50.

The information receiving section 51 in the information storage server 50 receives from the information processing equipment 30 and stores in the storage memory section 53 the certified information and the identification information for identifying the certified information. The information storage server 50, upon request for the certified information from the verification unit 60, for example, transmits to the verification unit 60 only the one that is preselected or the one that is requested by the verification unit 60 from among pieces of the certified information stored in the storage memory section 53. It is to be noted that the certified information is transmitted to the verification unit 60 always with a corresponding one of the identification information.

The verification receiving section 61 in the verification unit 60 receives from the information storage server 50 and stores in the verification memory section 63 the certified information and the identification information. The verification unit 60, in a verification process, receives a query including the identification information, and retrieves the certified information stored in the verification memory section 63. Then, the verification unit 60 verifies the certified information retrieved, or outputs the certified information retrieved for verification.

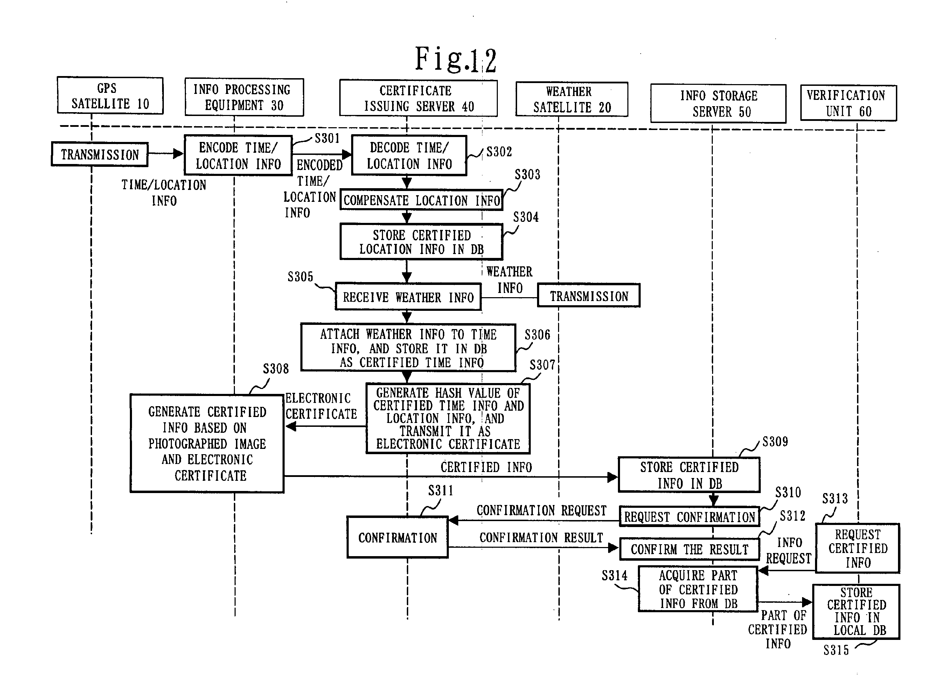

Fig. 12 is a diagram illustrating a process performed by the certification system according to this embodiment.

With this embodiment, a user who is boarding an airplane takes his or her own ID photo by the information processing equipment of an ID photo machine. The information processing equipment 30 acquires a certification code, which is made up of numerals and signs, as the electronic certificate issued by the certificate issuing server 40, through the processes from Step S301 to Step S307, just like the processes of Step S101 to Step S107 shown in Fig. 6 discussed in the first embodiment. Then, the information processing equipment 30 generates certified information based on an ID photo (image) taken and the certification code acquired. Then, the information processing equipment 30 transmits the certified information to the information storage server 50 (Step S308). Also, the information processing equipment 30 prints the ID photo. For example, the certification code is printed on the face side of the ID photo, and a two-dimensional barcode that is read for an access to the information storage server 50 may be printed on the reverse side thereof. Then, the information storage server 50 receives and stores in a database the certified information (Step S309). Just like the processes of Step S111 to Step S113 of Fig. 6, the information storage server 50 performs a confirmation process with the certificate issuing server 40 through the processes of Step S310 to Step 312.

To confirm airline passenger's identity, marshals have to acquire in advance the ID photos of passengers from the information storage server 50 using the verification unit 60, such as a mobile terminal, and a wearable computer. As a process for acquiring the ID photos of passengers in advance, firstly, the verification unit 60 requests the information storage server 50 for the certified information (Step S313). Then, the information storage server 50 acquires part of the certified information stored in the database, and transmits the part of the certified information to the verification unit 60 (Step S314). It is to be noted that the certified information to be transmitted may be either selected by the information storage server 50 or specified by the verification unit 60. For example, a marshal may enter the name of an airline company, a flight name, a destination, etc. into the verification unit 60. This allows the verification unit 60 to request the ID photos of the passengers boarding on the flight concerned exclusively as the certified information. Another possibility is that a user may enter his or her personal information such as address, name, age, gender, telephone number, and the like into the information processing equipment 30 when his or her ID photo is taken. Then, the information storage server 50 may receive from the information processing equipment 30 and store therein this personal information. This allows to specify an individual ID photo by using part of the personal information as a search key. To simplify the personal information entry, the information processing equipment 30 may be provided with a function to read information in a credit card, an airline card, an IC card, and the like.

The verification unit 60, upon receipt of the certified information from the information storage server 50, stores the certified information in a local database (Step S316). Then, a marshal displays an ID photo stored in Step S316 on a wearable display (part of the verification unit) and confirms whether or not people seated on board the aircraft are the right passengers.

Thus, the verification unit 60 may acquire and store the certified information by prior arrangement for verification of the certified information, instead of communicating with the information storage server 50 every time when it performs a verification process. This enables a highly efficient verification process if the process is required more than once in a short period of time.

In addition to the aforementioned method of confirming airline passenger's identity on board, the passenger's identity may be confirmed when a passenger purchases an air ticket or when a passenger checks in at an airport (when a boarding card is issued) according to this embodiment, which may further enhance airport security. In this case, at the time of check-in, the time when the ID photo was taken (or the time when the ID photo was registered at the time of purchasing the air ticket) is confirmed. At the same time, the ID photo is registered (a certificate is issued as well as when the photo was taken). In the airplane, the time when the ID photo was registered is confirmed. It may be confirmed that there is no switching between the right passengers and others during each period between the time of photo taking and the time of check-in and between the time of check-in and the time of boarding the aircraft. It is to be noted here that the verification process performed at the time of check-in of this embodiment may be replaced by the process discussed in the fifth embodiment.

Security may be enhanced if the information that is to be received, stored, and transmitted by the information storage server 50 of this embodiment is encoded data. Furthermore, information stored in the information storage server 50 may be shared among two or more airline companies, or laid open to casualty insurance companies and public security institutions, thereby improving convenience.

### Embodiment 7.

In mail order shopping, commercial products whose specifications and shapes are clearly indicated by the model names are more purchasable than others. The commercial products of this kind may cause fewer problems of inconsistency and misunderstanding between sellers and buyers. Fresh produce or the like, however, has no model name, and its shape and content are unique to each other. In this case, there are quite a few cases of inconsistency with the commercial products when sold only with the photos and descriptions.

A seventh embodiment uses the same certification system as that discussed in the first embodiment. According to the seventh embodiment, the time when the photo of a commercial product was taken and the location where the photo was taken are certified to check the time and the location at a later time.

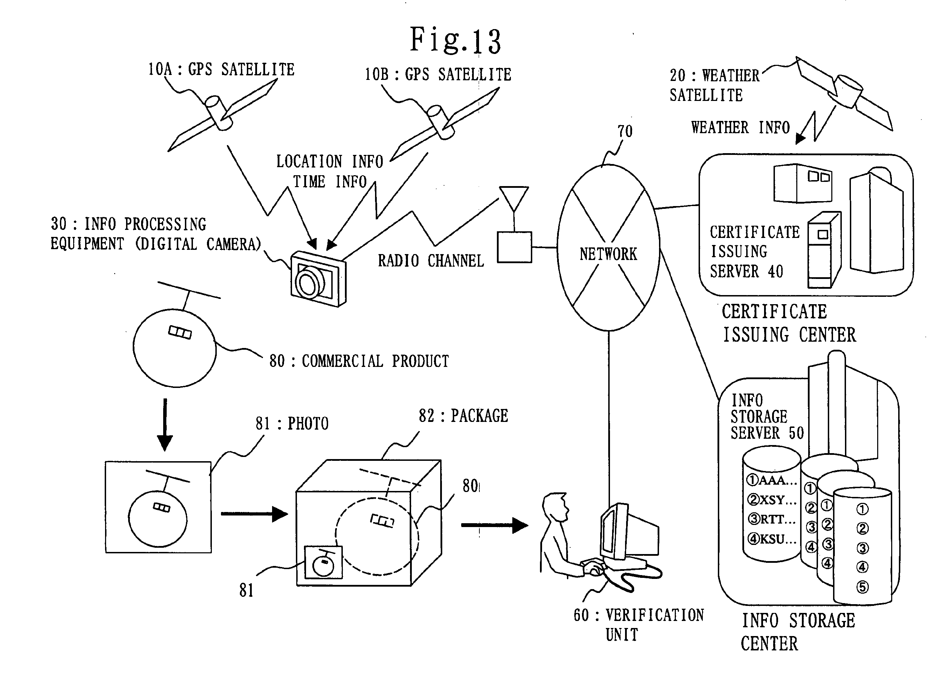

With this embodiment, as shown in Fig. 13, the information processing equipment 30 is electronic equipment having a function to take photos (images), such as a digital camera. The other elements are the same as those discussed in the first embodiment.

According to this embodiment, a trader who sells a commercial product 80, such as fruit, takes a photo of the commercial product 80 using the information processing equipment 30 that is equipped with a camera function. The information processing equipment 30 acquires an electronic certificate issued by the certificate issuing server 40 through the processes of Step S101 to Step S107 shown in Fig. 6 discussed in the first embodiment. Then, the information processing equipment 30 generates certified information based on the photo of the commercial product 80 and the electronic certificate acquired, and transmits the certified information to the information storage server 50. In Step S110, the information storage server 50 receives and stores in a database the certified information. In Step S111 to Step S113, the information storage server 50 performs a confirmation process with the certificate issuing server 40. The trader then shows the certified information (a photo 81 with additional certification for time and location) on his or her World Wide Web (WWW) site (a home page).

With this embodiment, the information storage server 50 may be provided for each trader. In this case, a trader holds authentication information. Then, the trader inputs his or her authentication information into the information processing equipment 30. Or otherwise, his or her authentication information may be prestored in the information processing equipment 30. In this case, in Step S109, the information processing equipment 30 may access the information storage server 50 by using the authentication information to store the certified information in the information storage serer 50.

When a consumer buys the commercial product 80, the person checks the area of production and the shipment date of the commercial product 80 by the certification added to the photo 81 on the WWW site using the verification unit 60 in and after Step S114. At the same time, the consumer selects the commercial product 80 by viewing the photo 81. Once the consumer orders the commercial product 80, the trader encloses the photo 81 in a package 82 of the commercial product 80, and sends off the package 82 to the consumer. The consumer, upon receipt of the commercial product 80, checks if the commercial product 80 in the package is the one that the consumer ordered by comparing the commercial product 80 and the photo 81 enclosed in the package. The consumer may confirm the area of production and the shipment date of the commercial product 80 by the certification added to the photo 81 received. Hence, business support may be provided to producers who wish for production area assurance. Furthermore, the amount of production may be checked by the number of photo prints. Hence, it becomes possible to prevent padding of shipment amount with products from other production areas.

By thus certifying the time and location when a product was photographed, the place of origin of the product may be confirmed.

This embodiment is not only applicable to mail order business but also to walk-in business in which products are sold at stores. In this case, products may be photographed on the production dates thereof, for example. Or otherwise, the date and year of production may be printed on labels. Then, the time when the photo was taken and the location where the photo was taken, or the time when the label was printed may be certified. Hence, the place of production, the date and year of production, and the like may be checked for each product.

Embodiment 8.
An eighth embodiment uses the same certification system as that discussed in the seventh embodiment. According to the eighth embodiment, the time when a label was attached to each piece of fruit and the location where the label was attached are certified to check the time and location for each piece of fruit at a later time.

With this embodiment, the information processing equipment 30 shown in Fig. 13 of the seventh embodiment is a mobile type printer equipped with a label printing function.

According to this embodiment, contracts are made with customers for each tree within an orchard. Then, at the harvesting time of the fruits, codes that certify the time and location are printed on labels by using the information processing equipment 30 that is equipped with a printer function. Then, the labels are attached to individual pieces of the fruit. Hence, customers are allowed to confirm when and from which tree each piece of the fruit was harvested.

Another possibility is that each piece of fruit is photographed with a tree on which that piece grew, or photographed before and after harvest by the information processing equipment 30 that is equipped with a camera function as that discussed in the seventh embodiment. Then, the photo is transmitted to a Web server over the Internet by using the information processing equipment 30. Then, the photo may be put on the home page of the farm. Hence, customer satisfaction may be improved with security.

In addition, the information storage server 50 may be equipped with a function that allows a customer to access and search the database directly for photos stored therein.

Embodiment 9.
Currently, there are some cases where industrial waste is not properly treated through a process from delivery or discharge until disposal.

A ninth embodiment utilizes the same certification system as that discussed in the first embodiment. According to the ninth embodiment, the time when the images of delivered or discharged materials of industrial waste at delivery or discharge were photographed and the location where those images were photographed are certified. Additionally, the time when the images of disposed materials of the industrial waste at disposal were photographed and the location where those images were photographed are certified to check, whether or not the industrial waste materials have been treated properly at a later time.

With this embodiment, the information processing equipment 30 shown in Fig. 1 discussed in the first embodiment is electronic equipment with a function to take photos (images), such as a digital camera.

According to this embodiment, a waste disposal firm handling industrial waste takes photos of waste materials at delivery or discharge as well as at disposal using the information processing equipment 30 that is equipped with a camera function. The information processing equipment 30 acquires an electronic certificate issued by the certificate issuing server 40 through the processes of Step S101 to Step S107 shown in Fig. 6 discussed in the first embodiment. Then, the information processing equipment 30 generates certified information based on the photos of industrial waste and the electronic certificate acquired. Then, the information processing equipment 30 transmits the certified information to the information storage server 50. In Step S110, the information storage server 50 receives and stores in a database the certified information. Through the processes of Step S111 to Step S113, the information storage server 50 performs a confirmation process with the certificate issuing server 40.

When the need arises to verify the time when the photos of industrial waste were taken and the site where the photos of industrial waste were taken, a verifier makes a query to the information storage server 50 using the verification unit 60 in Step S114 and the subsequent steps. The information storage server 50 performs a verification and transmits a verification result to the verification unit 60. The verification unit 60 receives the verification result. The verifier confirms the content of the verification result. Hence, it becomes possible to attest to the fact, by using the photos of industrial waste, that the delivered or discharged industrial waste materials have been properly treated.

It is another possibility that the information processing equipment 30 be equipped further with a sensor for measuring the weight of the back of a truck carrying industrial waste in addition to the camera function. In this case, the information storage server 50 may collect the weight of the back of the truck at each elapsed time as the certified information, thereby monitoring changes in the weight of waste carried on the back of the truck. Then, it may be confirmed whether or not the waste materials have been treated through a proper route for disposal. It may also be confirmed whether or not the treatment has been performed at proper sites. Hence, it becomes possible to curb illegal waste disposal.

### Embodiment 10.

A tenth embodiment utilizes the same certification system as that discussed in the ninth embodiment. The tenth embodiment describes a case of certifying the time when beef was weighed and the location where the beef was weighed, and confirming at a later time that the beef was properly delivered.

According to this embodiment, a beef dealer or butcher weighs beef in each step of the process handling the beef, such as slaughtering and sorting, by using the information processing equipment 30 that is equipped with a weighing function. The information processing equipment 30 generates certified information based on a weight value and an electronic certificate issued by the certificate issuing server 40. The information storage server 50 stores this certified information. A verifier makes a query to the information storage server 50 using the verification unit 60. The information storage server 50 makes verification and transmits a verification request to the verification unit 60. The verification unit 60 receives the verification result. The verifier confirms the content of the verification result. This allows beef buyers to check for a change in the weight of the beef in each step. Hence, it becomes possible to check whether or not other meet is mixed with the specific beef through the steps.

Another possibility may be that the information storage server 50 stores pieces of certified information about the same beef with association between one another. This allows associated pieces of certified information to be cross-referenced to one another. Hence, the associated pieces of certified information may be linked to one another.

### Embodiment 11.

Currently, when a paper document is copied via a photo copy machine or transmitted via a facsimile (FAX) machine, if an outputted copy of the paper document is tampered with, then it is difficult to attest to the fact that the copy of the document is tampered with.

An eleventh embodiment utilizes the same certification system as that discussed in the first embodiment. The eleventh embodiment describes a case of certifying the time when a paper document is copied via a photo copy machine or transmitted via a FAX machine and the location where the paper document is copied or transmitted, and confirming the time and location at a later time.

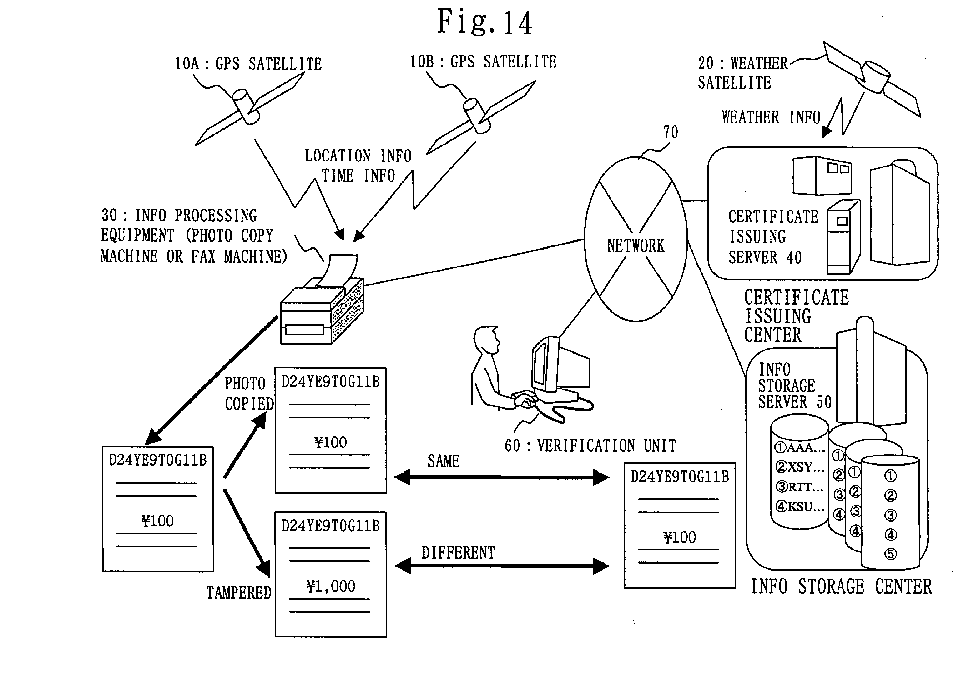

With this embodiment, as shown in Fig. 14, the information processing equipment 30 is electronic equipment having a function to output paper documents, such as a photo copy machine and a FAX machine. The other elements are the same as those discussed in the first embodiment.

According to this embodiment, a document is printed by using the information processing equipment 30 that is equipped with the function to output paper documents. The information processing equipment 30 acquires an electronic certificate issued by the certificate issuing server 40 through the processes of Step S101 to Step S107 shown in Fig. 6 discussed in the first embodiment. Then, the information processing equipment 30 generates certified information based on a photo copied or transmitted image of the document and the electronic certificate acquired. The information processing equipment 30 then combines a printable electronic certificate like a certification code (e.g., "D24YE9TOG11B" shown in Fig. 14) with the image to print the document. Then, the information processing equipment 30 transmits the document to the information storage server 50. In Step S110, the information storage server 50 receives and stores in a database the certified information. In the processes of Step S111 to Step S113, the information storage server 50 performs a confirmation process with the certificate issuing server 40.

To confirm that a printed copy or a photo copy of the document is not tampered with, the image of the document is confirmed based on the certification code that is printed on the printed copy of the document by using the verification unit 60, in and after Step S114. Hence, it becomes possible to confirm that the printed copy or photo copy of the document is not tampered with.

### Embodiment 12.

Currently, in concrete test piece testing, there are quite a few cases where the identity cannot be verified between a sampled piece and a tested piece. It should be noted here that a concrete test piece is a piece of concrete for crash testing that is sampled at a lot in a field site in which freshly mixed concrete to be tested has been poured. The concrete test piece is also used for testing concrete to determine the type and amount of raw materials for concrete mixing, and the like.

A twelfth embodiment utilizes the same certification system as that discussed in the first embodiment. The twelfth embodiment describes a case of certifying the time when a concrete test piece was sampled and the location where the concrete test piece was sampled, and confirming that a concrete test piece at a test is the one sampled.

With this embodiment, the information processing equipment 30 of Fig. 1 discussed in the first embodiment is communication equipment having a function to read information from a Radio Frequency ID (RFID) or write information into a RFID, such as a wireless reader/writer.

According to this embodiment, a person who samples a concrete test piece measures the condition of the concrete test piece at the time of sampling by using a RFID tag/chip equipped with a function to measure the condition of concrete, such as a temperature sensor and a humidity sensor, for example. The RFID tag/chip, which is embedded in the concrete test piece, stores a measured condition of the concrete test piece (e.g., a measured value of temperature or humidity). The information processing equipment 30 of a wireless reader/writer reads the condition of the concrete test piece from the RFID embedded therein. Then, the information processing equipment 30 acquires an electronic certificate issued by the certificate issuing server 40 through the processes of Step S101 to Step S107 shown in Fig. 6 discussed in the first embodiment. Then, the information processing equipment 30 generates certified information based on the condition of the concrete test piece read out from the RFID and the electronic certificate acquired. Then, the information processing equipment 30 transmits the certified information to the information storage server 50. In Step S110, the information storage server 50 receives and stores in a database the certified information. The information storage server 50 performs a confirmation process with the certificate issuing server 40 through the process of Step S111 to Step S113.

With this embodiment, the information processing equipment 30 performs the above-mentioned process regularly (e.g., every week). The information storage server 50 stores a record of the time, location, and condition of the concrete every time. It is to be noted here that the RFID tag/chip embedded in the concrete test piece may also store the time and location as well as the condition of the concrete.

In the testing of the concrete test piece, if the time when the concrete test piece was sampled and the location where the concrete test piece was sampled is to be verified, the process is performed in Step S114 and the subsequent steps as follows. A verifier makes a query to the information storage server 50 using the verification unit 60. The information storage server 50 performs verification and transmits a verification result to the verification unit 60. The verification unit 60 receives the verification result. The verifier confirms the content of the verification result. Hence, it may be attested to the fact that the one at testing and the one at sampling are the same concrete test piece by using data stored in the RFID embedded in the concrete test piece during the process of sampling to testing of the concrete test piece.

With further reference to the foregoing embodiments, the information processing equipment does not always have to encode the time information and the location information when transmitting those to the certificate issuing server.

With further reference to the foregoing embodiments, the information processing equipment does not always have to acquire the time information and the location information from GPS satellites. With reference to the first embodiment, in the case of certifying exclusively the time when an image was taken, for example, the time/location information receiving section 34 of the information processing equipment 30 shown in Fig. 3 is omittable. In this case, the information processing equipment 30 may either acquire the time information to be transmitted to the certificate issuing server 40 from an internal clock, or from a Network Time Protocol (NTP) server or the like over a network.

With further reference to the foregoing embodiments, the information processing equipment does not always have to transmit the time information and the location information to the certificate issuing server. With reference to the first embodiment, for example, in the case of certifying exclusively the time when a photo was taken, the information processing equipment 30 may transmit the certification request to the certificate issuing server 40 via the certification requesting section 32.
The certificate issuing server 40 shown in Fig. 4 may acquire the time information indicating the current time from an internal clock, from an NTP server or the like over a network, or from a GPS satellite, a weather satellite, or the like. Then, the certificate issuing server 40 receives the certification request from the information processing equipment 30 via the certification request receiving section 41. The certificate issuing section 42 attaches unique data available at no other time than the current time to the time information, and issues the electronic certificate for thereby certifying the time. Subsequent processes are performed in the same manner as those discussed in the first embodiment.

Thus, the certificate issuing server 40 may issue the certificate for certifying time by using the time information acquired by the certificate issuing server itself, instead of using the time information received from the information processing equipment 30. In this case, the information processing equipment 30 side is not allowed to manipulate the time that is certified. Hence, the reliability of the certification system is enhanced.

For the reasons mentioned above, with reference to Fig. 6 discussed in the first embodiment, for example, the GPS satellites 10 do not always have to transmit the time information and the location information to the information processing equipment 30. Furthermore, with reference to Step S101, the time information and the location information do not have to be encoded. Still further, in Step S102, the time information and the location information do not have to be decoded. Still further, in Step S101, the time information may be transmitted exclusively, instead of transmitting the time information and the location information. Or, otherwise, neither of the time information nor the location information may be transmitted.

The foregoing embodiments of the present invention being thus described should not limit the scope of the present invention.

With further reference to foregoing each embodiment, the information processing equipment 30, the certificate issuing server 40, the information storage server 50, and the verification unit 60 may be implemented by computer.

The information processing equipment 30, the certificate issuing server 40, the information storage server 50, and the verification unit 60 each are equipped with a central processing unit (CPU), which is not shown in the figures, for executing programs. The CPU may be connected via a bus to a Read Only Memory section (ROM), a Random Access Memory section (RAM), a communication board, a display, a keyboard, a mouse, a Flexible Disc Drive (FDD), a Compact Disc Drive (CDD), a magnetic disk drive, an optical disk drive, a printer, a scanner, and the like.

A RAM is a type of volatile memory section. A ROM, a FDD, a CDD, a magnetic disk drive, an optical disk drive are types of nonvolatile memories. They are the examples of memories or storages.

Information handled by the information processing equipment 30, the certificate issuing server 40, the information storage server 50, and the verification unit 60 is recorded and read by a memory section or storage.

The communication board is connected, for example, to a LAN, the Internet, an Integrated Services Digital Network (ISDN), and the like.

The magnetic disk drive stores an operating system (OS), a window system, a program group, and a file group. The program group is executed by the CPU, the OS, and the window system.

The information processing equipment 30, the certificate issuing server 40, the information storage server 50, and the verification unit 60 each may be configured in part or in full by a computer operable program. Or, otherwise, they may be implemented by a firmware that is stored in the ROM. Or, otherwise, they may be embodied as a combination of software and hardware, or a combination of software, hardware, and firmware.

The program group includes programs for making the CPU execute the processes described as "sections" in the foregoing embodiments. These programs are generated by a computer language, such as C language, HTML, SGML, and XML, for example.

The aforementioned programs are stored by other types of storage medium, such as a magnetic disk drive, a Flexible Disk (FD), an optical disk, a Compact Disk (CD), a Mini Disk, (MD), and a Digital Versatile Disc (DVD), and read by the CPU to be executed.

### Brief Description of the Drawings

Fig. 1 is a diagram illustrating a configuration that is necessary for certifying the time when an image was taken in security patrol rounds and the site where the image was taken according to a first embodiment;
Fig. 2 is a diagram illustrating the configuration of a certification system for security patrol according to the first embodiment;
Fig. 3 is a diagram illustrating a configuration of the information processing equipment according to the first embodiment;
Fig. 4 is a diagram illustrating a configuration of the certificate issuing server according to the first embodiment;
Fig. 5 is a diagram illustrating a configuration of the information storage server according to the first embodiment;
Fig. 6 is a diagram illustrating a process of certifying the time when an image was taken in security patrol rounds and the site where the image was taken by the certification system according to the first embodiment;
Fig. 7 is a diagram illustrating a process of certifying the time when an image was taken in security patrol rounds and the site where the image was taken by a certification system according to a second embodiment;
Fig. 8 is a diagram illustrating a configuration that is necessary for certifying the time when an ID photo was taken and the site where the ID photo was taken according to a fifth embodiment;
Fig. 9 is a diagram illustrating the configuration of a certification system according to a sixth embodiment;
Fig. 10 is a diagram illustrating the configuration of an information storage server according to the sixth embodiment;
Fig. 11 is a diagram illustrating a configuration of the verification unit according to the sixth embodiment;
Fig. 12 is a diagram illustrating a process of acquiring certified information by the verification unit in the certification system according to the sixth embodiment;
Fig. 13 is a diagram illustrating a configuration that is necessary for certifying the time when a commercial product was photographed and the site where the commercial product was photographed according to a seventh embodiment; and
Fig. 14 is a diagram illustrating a configuration that is necessary for certifying the time when a paper document was outputted and the site where the paper document was outputted according to an eleventh embodiment.

### Explanation of Reference Numerals

- 10: GPS satellite
- 20: weather satellite
- 30: information processing equipment
- 31: information processing section
- 32: certification requesting section
- 33: information outputting section
- 34: time/location information receiving section
- 40: certificate issuing server
- 41: certification request receiving section
- 42: certificate issuing section
- 43: certificate transmitting section
- 44: weather information receiving section
- 45: location information compensating section
- 50: information storage server
- 51: information receiving section
- 52: certification outputting section
- 53: storage memory section
- 60: verification unit
- 61: verification receiving section
- 62: verifying section
- 63: verification memory section
- 70: network
- 80: commercial product
- 81: photo
- 82: package

## Claims

1. A certification system, comprising:
information processing equipment that processes information;
a certificate issuing server that issues an electronic certificate to certify an operating environment of the information processing equipment; and
an information storage server that stores information in a storage memory section,
wherein the information processing equipment transmits a certification request of the operating environment of the information processing equipment to the certificate issuing server,
wherein the certificate issuing server issues the electronic certificate to certify the operating environment of the information processing equipment based on the certification request of the operating environment transmitted from the information processing equipment,
wherein the information processing equipment receives the electronic certificate issued by the certificate issuing server, generates certified information based on the electronic certificate and processed information and identification information to identify the certified information, and transmits the certified information and the identification information to the information storage server, and
wherein the information storage server receives the certified information and the identification information from the information processing equipment and stores the certified information and the identification information in the storage memory section; and also receives the identification information, retrieves the certified information stored in the storage memory section, and outputs the certified information retrieved.

2. The certification system of claim 1, wherein the certificate issuing server certifies time when the information processing equipment operates as the operating environment.

3. The certification system of claim 1, wherein the certificate issuing server certifies location where the information processing equipment operates as the operating environment.

4. The certification system of claim 1, wherein the information processing equipment acquires time information indicating a current time, and transmits the time information acquired to the certificate issuing server, and
wherein the certificate issuing server receives the time information from the information processing equipment, attaches unique data available at no other time than a specific time indicated by the time information to the time information, and thereby issues the electronic certificate to certify the specific time.

5. The certification system of claim 1, wherein the information processing equipment acquires location information indicating a location of the information processing equipment, and transmits the location information acquired to the certificate issuing server, and
wherein the certificate issuing server receives the location information from the information processing equipment, attaches unique data available at no other location than a specific location indicated by the location information to the location information, and thereby issues the electronic certificate to certify the specific location.

6. The certification system of claim 5, wherein the certificate issuing server attaches compensation information to compensate the specific location indicated by the location information to the location information, and thereby issues the electronic certificate.

7. The certification system of claim 1, wherein the information processing equipment generates composite information that is made up of the electronic certificate and the processed information, and transmits the composite information to the information storage server as the certified information, and
wherein the information storage server receives the composite information and the identification information from the information processing equipment and stores the composite information and the identification information in the storage memory section; and also receives a query including the identification information, retrieves the composite information stored in the storage memory section, and outputs the composite information retrieved.

8. The certification system of claim 1, wherein the information processing equipment generates composite information that is made up of the electronic certificate and the processed information, calculates a hash value of the composite information, and transmits the hash value to the information storage server as the certified information, and
wherein the information storage server receives the hash value and the identification information from the information processing equipment and stores the hash value and the identification information in the storage memory section; also receives the composite information, compares the composite information using the hash value, and stores in the storage memory section the composite information compared; and also receives a query including the identification information, retrieves the composite information stored in the storage memory section, and outputs the composite information retrieved.

9. The certification system of claim 1, wherein the certificate issuing server and the information storage server are one unit.

10. A certificate issuing server, which issues an electronic certificate to information processing equipment, comprising:
a certification request receiving section that receives a certification request of an operating environment of the information processing equipment;
a certificate issuing section that issues an electronic certificate to certify the operating environment of the information processing equipment based on the certification request received by the certification request receiving section; and
a certificate transmitting section that transmits the electronic certificate issued by the certificate issuing section to the information processing equipment.

11. The certificate issuing server of claim 10, wherein the certificate issuing server certifies at least one of time when the information processing equipment operates as the operating environment and location where the information processing equipment operates as the operating environment.

12. Information processing equipment, which processes information, comprising :
an information processing section that processes information and stores the information as processed information;
a certification requesting section that transmits a certification request of an operating environment of the information processing equipment to a certificate authority serer that issues an electronic certificate that certifies the operating environment of the information processing section; and
an information outputting section that receives the electronic certificate issued by the certificate issuing server in reply to the certification request transmitted by the certification request section, generates certified information based on the electronic certificate and the processed information as well as identification information to identify the certified information, and outputs the certified information and the identification information.

13. The information processing equipment of claim 12, wherein the information processing equipment is a mobile security gadget that acquires information about a security target.

14. An information storage server, comprising:
an information receiving section that receives from information processing equipment certified information to certify an operating environment of the information processing equipment and identification information to identify the certified information;
a storage memory section that stores the certified information and the identification information received by the information receiving section; and
a certification outputting section that receives a query including the identification information, retrieves the certified information stored in the storage memory section, outputs the certified information retrieved, and thereby certifies the operating environment of the information processing equipment.

15. The information storage server of claim 14, wherein the storage memory section further stores an order of reception of the certified information and the identification information received by the information receiving section.

16. The certification system of claim 1, wherein the information processing equipment transmits to the information storage server authentication information to access the information storage server together with the certified information and the identification information, and
wherein the information storage server receives the certified information, the identification information, and the authentication information from the information processing equipment, and stores the certified information and the identification information received in the storage memory section if the authentication information is valid.

17. The certification system of claim 1, further comprising a verification unit equipped with a verification memory section that verifies the operating environment of the information processing equipment,
wherein the information storage server transmits part of the certified information and part of the identification information stored in the storage memory section to the verification unit, and
wherein the verification unit receives the certified information and the identification information transmitted by the information processing equipment and stores the certified information and the identification information in the verification memory section; and also receives a query including the identification information, retrieves the certified information stored in the verification memory section, and verifies the operating environment of the information processing equipment with reference to the certified information retrieved.

18. A verification unit, comprising:
a verification receiving section that receives certified information and identification information from an information storage server;
a verification memory section that stores the certified information and the identification information received by the verification receiving section; and
a verifying section that receives a query including the identification information, retrieves the certified information stored in the verification memory section, and verifies an operating environment of information processing equipment with reference to the certified information retrieved.

19. The information processing equipment of claim 12, wherein the information processing section photographs an image and stores the image as the processed information.

20. The information processing equipment of claim 12, wherein the information processing section weighs an object and stores a weight result as the processed information.

21. The certification system of claim 1, wherein the certificate issuing server attaches unique information available at no other time than a current time to time information based on the certification request of the operating environment transmitted from the information processing equipment, and thereby issues the electronic certificate to certify the current time.

22. A certification system, comprising:
information processing equipment that processes information;
a certificate issuing server that issues an electronic certificate to certify an operating environment of the information processing equipment; and
an information storage server that stores information in a storage memory section,
wherein the information processing equipment transmits a certification request of the operating environment of the information processing equipment to the certificate issuing server,
wherein the certificate issuing server issues the electronic certificate to certify the operating environment of the information processing equipment based on the certification request of the operating environment transmitted from the information processing equipment,
wherein the information processing equipment receives the electronic certificate issued by the certificate issuing server, generates certified information based on the electronic certificate and processed information, and transmits the certified information to the information storage server, and
wherein the information storage server receives the certified information from the information processing equipment and stores the certified information in the storage memory section; and also receives identification information to identify the certified information, retrieves the certified information stored in the storage memory section based on the identification information received, and outputs the certified information retrieved.

23. Information processing equipment, which processes information, comprising:
an information processing section that processes information and stores the information as processed information;
a certification requesting section that transmits a certification request of an operating environment of the information processing equipment to a certificate authority serer that issues an electronic certificate that certifies the operating environment of the information processing section; and
an information outputting section that receives the electronic certificate issued by the certificate issuing server in reply to the certification request transmitted by the certification requesting section, generates certified information based on the electronic certificate and the processed information, and outputs the certified information generated.

24. An information storage server, comprising:
an information receiving section that receives certified information to certify an operating environment of the information processing equipment from information processing equipment;
a storage memory section that stores the certified information received by the information receiving section; and
a certification outputting section that receives a query including identification information to identify the certified information, retrieves the certified information stored in the storage memory section, outputs the certified information retrieved, and thereby certifies the operating environment of the information processing equipment.
